# EUROPEAN PATENT SPECIFICATION

(11) **EP 4 254 591 B1**
(45) Date of publication and mention of the grant of the patent: **17.12.2025**
(21) Application number: 21965884.6
(22) Date of filing: 30.11.2021
(51) Int. Cl.: H01M 10/42, H01M 50/308, H01M 50/383, H01M 50/209, F16L 3/04

(54) **BATTERY, ELECTRICAL APPARATUS, AND METHOD AND APPARATUS FOR MANUFACTURING BATTERY**
BATTERIE, ELEKTRISCHE VORRICHTUNG SOWIE VERFAHREN UND VORRICHTUNG ZUR HERSTELLUNG DER BATTERIE
BATTERIE, APPAREIL ÉLECTRIQUE, ET PROCÉDÉ ET APPAREIL DE PRÉPARATION DE BATTERIE

(43) Date of publication of application: 04.10.2023
(73) Proprietor: Contemporary Amperex Technology (Hong Kong) Limited, Central, Central And Western District (HK)
(72) Inventor: HU, Langchao, Ningde, Fujian 352100 (CN); HUANG, Xiaoteng, Ningde, Fujian 352100 (CN); YANG, Haiqi, Ningde, Fujian 352100 (CN); XU, Chenyi, Ningde, Fujian 352100 (CN); WU, Xiaozhi, Ningde, Fujian 352100 (CN); WANG, Peng, Ningde, Fujian 352100 (CN); SUN, Zhanyu, Ningde, Fujian 352100 (CN)
(74) Representative: Ziebig Hengelhaupt Intellectual Property Attorneys Patentanwaltskanzlei PartGmbB
(86) International application number: PCT/CN2021/134381
(87) International publication number: WO 2023/097440

(56) References cited:
- CN-A- 110 148 694
- CN-A- 110 970 848
- CN-A- 111 952 515
- CN-A- 112 018 462
- CN-A- 112 018 462
- CN-A- 113 013 503
- CN-U- 204 300 518
- CN-U- 204 300 518
- CN-U- 211 449 905
- FR-A- 1 559 036
- JP-A- 2008 251 263
- US-A1- 2021 320 337

## Description

### TECHNICAL FIELD

Embodiments of this application relate to the field of batteries, and more specifically, to a battery and a method for manufacturing battery.

### BACKGROUND

Energy conservation and emission reduction are crucial to the sustainable development of the automobile industry. In this context, electric vehicles, with their advantages in energy conservation and environmental protection, have become an important part of the sustainable development of the automobile industry. For electric vehicles, battery technology is an important factor in connection with their development.

In the development of battery technology, in addition to performance improvement, safety is another non-negligible issue. If the safety of a battery cannot be guaranteed, the battery cannot be used. Therefore, how safety performance of batteries is enhanced is an urgent technical problem that needs to be solved in battery technology. CN112018462A discloses a battery including a single battery provided with an electrode terminal; a fire-fighting pipeline for accommodating a fire-fighting medium; and a fixing piece used for fixing the fire-fighting pipeline and connected with theelectrode terminal. FR1559036A discloses fixing clamps for pipes, electrical cables, bars and similar devices. The fixing collar for pipes comprises a receiving element for the pipes which is constituted by a base which can be fixed to a surface and provided with two branches having a shape which allows them to partially surround the pipe and a closure element which can be fixed by engagement to at least one of these branches so that the pipe is completely surrounded when this element is thus fixed. CN113013503A discloses a battery, an electrical device, a method and device for preparing a battery, which can collect the condensate produced by the gas inside the battery condensed by a pipe, and prevent the condensate from flowing around the battery and contacting the charged structure to cause the battery to be short-circuited. US2021320337A1 discloses a battery module, which includes a plurality of batteries, an upper cover, and a pressing strip. The pressing strip covers an explosion-proof valve of a battery, and includes a main body portion and a bottom plate portion. The bottom plate portion is connected to the main body portion and forms an accommodating cavity together with the main body portion. A fire extinguishing agent is sealed in the accommodating cavity. CN111952515A discloses a battery comprising: a plurality of battery cells configured to be electrically connected through a confluence part, wherein each battery cell comprises a pressure relief mechanism, and the pressure relief mechanism is used for actuating to release the internal pressure when the internal pressure or temperature of the battery cell reaches a threshold value; and an insulating member for covering the confluence part to prevent emissions from the battery cells from shorting the at least one battery cell upon actuation of the pressure relief mechanism.

### SUMMARY

This application provides a battery, an electric apparatus, and a method and an apparatus for manufacturing battery, so as to enhance safety performance of the battery.

According to a first aspect as claimed in claim 1, a battery is provided. The battery includes a battery cell including a first wall, where the first wall is provided with a pressure relief mechanism, the pressure relief mechanism being configured to be actuated when internal pressure or temperature of the battery cell reaches a threshold, so as to relieve the internal pressure; a firefighting pipe configured to accommodate a firefighting medium, where the firefighting pipe is configured to discharge the firefighting medium when the pressure relief mechanism is actuated; and a fixing member disposed between the first wall and the firefighting pipe, where the fixing member is configured to fix the firefighting pipe. The firefighting pipe includes a first restraint member, and the fixing member includes a second restraint member, where the first restraint member and the second restraint member fit with each other to restrict the firefighting pipe in a first direction and a second direction, the first direction is perpendicular to the first wall, and the second direction is parallel to the first wall and perpendicular to an extending direction of the firefighting pipe.

With the technical solution in this embodiment of this application, the firefighting pipe is disposed in the battery, such that the firefighting medium can be discharged when the pressure relief mechanism of the battery cell is actuated, which cools the emissions of the battery cell and even the inside of the battery cell, enhancing the safety performance of the battery. On this basis, the firefighting pipe is provided with the first restraint member, and the battery is further provided with the fixing member, the fixing member being provided with the second restraint member. The first restraint member and the second restraint member fit with each other to restrict the firefighting pipe in a plurality of directions, so that the firefighting pipe can be stably disposed in the battery and provide reliable firefighting and temperature regulation effects, so as to enhance the safety performance of the battery.

In some possible implementations, the first restraint member is a single-claw structure, the single-claw structure including a connecting portion and a first claw portion, where the connecting portion is formed by a pipe wall of the firefighting pipe extending along the second direction, the first claw portion is connected to the connecting portion and extends toward the battery cell, and the first claw portion is snap-fitted with the second restraint member.

With the technical solution in the implementations, the first restraint member on the firefighting pipe is designed as the single-claw structure and is snap-fitted with the second restraint member on the fixing member, which facilitates provision of the single-claw structure on the firefighting pipe while ensuring stable connection between the first restraint member and the second restraint member, accordingly improving production efficiency of the firefighting pipe.

In some possible implementations, the second restraint member is a slot structure, the slot structure including a first slot wall and a second slot wall arranged in the second direction, where the first slot wall and the second slot wall are configured to clamp the first claw portion to restrict the firefighting pipe in the first direction and the second direction.

With the technical solution in the implementations, the second restraint member on the fixing member is designed as the slot structure that fits with the first claw portion, and the first slot wall and the second slot wall in the slot structure clamp the first claw portion, which can improve snap-fit strength between the first restraint member and the second restraint member, thereby improving restriction and fixing effects of the firefighting pipe in the first direction and the second direction and improving mounting stability of the firefighting pipe in the battery.

In some possible implementations, an end of the first slot wall and/or the second slot wall away from the battery cell is provided with a first protrusion, an end of the first claw portion close to the battery cell is provided with a second protrusion, and the first protrusion and the second protrusion fit with each other to restrict the firefighting pipe in the first direction.

With the technical solution in the implementations, when the first slot wall and/or the second slot wall and the first claw portion are snap-fitted with each other, the second protrusion on the first claw portion is provided toward the battery cell relative to the first protrusion on the first slot wall and/or the second slot wall, so that the first protrusion can prevent the second protrusion and the first claw portion on which the second protrusion is located from leaving the battery cell, thereby further improving the snap-fit strength between the second restraint member and the first restraint member in the first direction, so as to improve the restriction and fixing effects of the firefighting pipe in the first direction.

In some possible implementations, an end of the first protrusion away from the battery cell is provided with a first slope, and an end of the second protrusion close to the battery cell is provided with a second slope, the first slope and the second slope corresponding to each other and each being oblique to a plane perpendicular to the first wall.

With the technical solution in the implementations, on the basis that the first claw portion is provided with the first protrusion and the first slot wall and/or the second slot wall is provided with the second protrusion that fits with the first protrusion, the first protrusion and the second protrusion may each be provided with a slope, and the slopes fit with each other, which can further improve mounting efficiency of the first claw portion between the first slot wall and the second slot wall while ensuring a good snap-fit effect between the first claw portion and the first slot wall and the second slot wall. Therefore, the technical solution in the implementations can improve the mounting efficiency of the firefighting pipe in the battery while ensuring the mounting stability of the firefighting pipe in the battery.

In some possible implementations, the slot structure extends along a third direction, and the first claw portion is able to slide in the slot structure along the third direction, where the third direction is parallel to the first wall and parallel to the extending direction of the firefighting pipe.

With the technical solution in the implementations, the second restraint member of the slot structure extends along the third direction, and thus the slot structure has a certain length in the third direction. The first claw portion in the firefighting pipe can slide in the slot structure along the third direction. During operation of the battery cell, the battery cell swells due to chemical reactions inside the battery cell. When the battery cell swells in the third direction, a position of the fixing member located on the first wall of the battery cell changes, and even a position of the second restraint member on the fixing member changes. Because the first claw portion in the firefighting pipe can slide in the second restraint member of the slot structure along the third direction, even though the swelling of the battery cell causes the position change of the second restraint member, it has little or no effect on the firefighting pipe. Therefore, even if the battery cell swells, the mounting stability of the firefighting pipe in the battery remains high.

In some possible implementations, the first restraint member is a double-claw structure, the double-claw structure including a connecting portion and a first claw portion and a second claw portion arranged in the second direction, where the connecting portion is formed by a pipe wall of the firefighting pipe extending along the second direction, and the first claw portion and the second claw portion are connected to the connecting portion and extend toward the battery cell; and the first claw portion and the second claw portion are configured to clamp the second restraint member to restrict the firefighting pipe in the first direction and the second direction.

With the technical solution in the implementations, the first restraint member of the double-claw structure is provided on the firefighting pipe, and the double-claw structure is used to clamp the second restraint member on the fixing member to mount the firefighting pipe in the battery. Specifically, when the double-claw structure clamps the second restraint member, the double-claw structure can achieve good restriction and fixing effects on the second restraint member in two opposite sub-directions in the second direction, so that the firefighting pipe has high stability in the second direction. In addition, when the double-claw structure clamps the second restraint member, the double-claw structure and the second restraint member can have interaction forces in the first direction, so as to ensure that the firefighting pipe also has certain stability in the first direction.

In some possible implementations, the second restraint member is a snap-fit structure, the snap-fit structure including a first snap-fit portion and a second snap-fit portion arranged in the first direction, where the first snap-fit portion is formed by the fixing member extending along a direction leaving the battery cell, the second snap-fit portion is provided at an end of the first snap-fit portion away from the battery cell, a size of the second snap-fit portion is not smaller than that of the first snap-fit portion in the second direction, and the first claw portion and/or the second claw portion is snap-fitted with the second snap-fit portion.

With the technical solution in the implementations, the second restraint member is designed as the snap-fit structure including the first snap-fit portion and the second snap-fit portion, where the second snap-fit portion is provided toward the firefighting pipe, and the size of the second snap-fit portion in the second direction is not smaller than that of the first snap-fit portion in the second direction. Therefore, the second snap-fit portion with a larger size can easily achieve snap-fit of the second snap-fit portion in the double-claw structure of the firefighting pipe, and improve snap-fit strength of the second snap-fit portion in the double-claw structure.

In some possible implementations, an end of the first claw portion and/or the second claw portion close to the battery cell is provided with a third protrusion; and the second snap-fit portion includes a fourth protrusion protruding in the second direction relative to the first snap-fit portion, and the fourth protrusion and the third protrusion fit with each other to restrict the firefighting pipe in the first direction.

With the technical solution in the implementations, when the first claw portion and/or the second claw portion and the second snap-fit portion are snap-fitted with each other, the fourth protrusion on the second snap-fit portion is provided away from the battery cell relative to the third protrusion on the first claw portion and/or the second claw portion, so that the fourth protrusion can prevent the third protrusion and the first claw portion and/or the second claw portion on which the third protrusion is located from leaving the battery cell, thereby further improving the snap-fit strength between the second restraint member and the first restraint member in the first direction, so as to improve the restriction and fixing effects of the firefighting pipe in the first direction.

In some possible embodiments, an end of the third protrusion close to the battery cell is provided with a third slope, an end of the fourth protrusion away from the battery cell is provided with a fourth slope, and the third slope and the fourth slope correspond to each other and each are oblique to a plane perpendicular to the first wall.

With the technical solution in the implementations, on the basis that the first claw portion and/or the second claw portion is provided with the third protrusion and the second snap-fit portion is provided with the fourth protrusion that fits with the third protrusion, the third protrusion and the fourth protrusion may each be provided with a slope, and the slopes fit with each other, which can further improve mounting efficiency of the second snap-fit portion between the first claw portion and the second claw portion while ensuring a good snap-fit effect between the second snap-fit portion and the first claw portion and the second claw portion, thereby improving the mounting efficiency of the firefighting pipe in the battery while ensuring the mounting stability of the firefighting pipe in the battery.

In some possible implementations, the double-claw structure extends along a third direction, and the second restraint member is able to slide in the double-claw structure along the third direction, where the third direction is parallel to the first wall and parallel to the extending direction of the firefighting pipe.

With the technical solution in the implementations, the first restraint member of the double-claw structure extends along the third direction, and thus the double-claw structure has a certain length in the third direction. The second restraint member on the fixing member can slide in the double-claw structure along the third direction. During operation of the battery cell, the battery cell swells due to chemical reactions inside the battery cell. When the battery cell swells in the third direction, the position of the fixing member located on the first wall of the battery cell changes, and even the position of the second restraint member on the fixing member changes. Because the second restraint member can slide in the double-claw structure along the third direction, even though the swelling of the battery cell causes the position change of the second restraint member, it has little or no effect on the firefighting pipe. Therefore, even if the battery cell swells, the mounting stability of the firefighting pipe in the battery remains high.

In some possible implementations, the first restraint member extends along the third direction, and the first restraint member and the firefighting pipe have a same extending length in the third direction, where the third direction is parallel to the first wall and parallel to the extending direction of the firefighting pipe.

With the technical solution in the implementations, the firefighting pipe can be easily mounted on a plurality of fixing members at different positions via the first restraint members on the firefighting pipe. In an example, in different types of battery cells, sizes of the battery cells in the third direction may change, and therefore positions of fixing members on the different types of battery cells may also change accordingly. In another example, in a plurality of battery cells, fixing members may be disposed on first walls of only some of the battery cells, and positions of the fixing members on the plurality of battery cells may also be adjusted and changed under different application requirements. In the case of the foregoing two examples, with the technical solution in this embodiment of this application, the first restraint member on the firefighting pipe can still be used to fit with the fixing member for mounting. In other words, fixed mounting of the firefighting pipe is not affected by the change in the positions of the fixing members on the plurality of battery cells. With the technical solution in the implementations, the mounting efficiency of the firefighting pipe in the battery can be improved, and the firefighting pipe can be applicable to more application scenarios, facilitating promotion and use of the firefighting pipe in many different types of batteries.

In some possible implementations, the firefighting pipe includes at least one pair of the first restraint members, and each pair of the first restraint members is located on two sides of the firefighting pipe in the second direction, respectively; and the fixing member includes at least one pair of the second restraint members, and each pair of the second restraint members is provided corresponding to each pair of the first restraint members.

With the technical solution in the implementations, the two sides of the firefighting pipe in the second direction are provided with the at least one pair of the first restraint members, where the at least one pair of the first restraint members and the corresponding at least one pair of the second restraint members fit with each other to achieve reliable and stable restriction and fixing of the firefighting pipe in the second direction, thereby improving the mounting stability of the firefighting pipe in the battery.

In some possible implementations, the firefighting pipe includes a first pipe wall and a second pipe wall facing away from each other in the first direction, and the first pipe wall is farther away from the battery cell than the second pipe wall, where thickness of the first pipe wall is greater than that of the second pipe wall, and/or the first pipe wall is provided with a reinforcing member.

With the technical solution in the implementations, in the firefighting pipe, the thickness of the first pipe wall farther away from the battery cell is greater than that of the second pipe wall closer to the battery cell, and/or the first pipe wall is provided with the reinforcing member. Therefore, the first pipe wall farther away from the battery cell may have higher strength and be capable of withstanding an impact caused by an external force on the firefighting pipe to a greater extent, improving the use reliability of the firefighting pipe in the battery.

In some possible implementations, in the second direction, a size of the first pipe wall is greater than that of the second pipe wall.

With the technical solution in the implementations, in the firefighting pipe, the sizes of the first pipe wall and the second pipe wall in the second direction may also be designed to make the first pipe wall stronger than the second pipe wall in strength. To be specific, the first pipe wall may have higher strength and be capable of withstanding the impact caused by the external force on the firefighting pipe to a greater extent, improving the use reliability of the firefighting pipe in the battery. In addition, when the emissions inside the battery cell pass through the pressure relief mechanism and impact the first pipe wall, the second pipe wall may be entirely attached to the first pipe wall. When the first pipe wall and the second pipe wall have a same size, the second pipe wall and the first pipe wall attached to each other block a flow channel, and therefore prevent the firefighting medium in the firefighting pipe from flowing through the corresponding pressure relief mechanism and into the battery cell, affecting the firefighting effect of the firefighting pipe. However, with the technical solution in the implementations, the size of the first pipe wall in the second direction is greater than that of the second pipe wall in the second direction. Therefore, even if the second pipe wall is attached to the first pipe wall, the flow channel is not completely blocked, so that the firefighting medium may flow through the corresponding pressure relief mechanism and into the battery cell, providing a good firefighting effect.

According to another not claimed aspect, an electric apparatus is provided and includes the battery according to the first aspect or any one of the possible implementations of the first aspect, where the battery is configured to supply electric energy to the electric apparatus.

According to a second aspect as claimed in claim 14, a method for manufacturing battery is provided and includes: providing a battery cell, where the battery cell includes a first wall, the first wall being provided with a pressure relief mechanism, and the pressure relief mechanism being configured to be actuated when internal pressure or temperature of the battery cell reaches a threshold, so as to relieve the internal pressure; providing a firefighting pipe, where the firefighting pipe is configured to accommodate a firefighting medium and discharge the firefighting medium when the pressure relief mechanism is actuated; providing a fixing member, where the fixing member is disposed between the first wall and the firefighting pipe; and fixedly mounting the firefighting pipe on the fixing member. The firefighting pipe includes a first restraint member, and the fixing member includes a second restraint member, where the first restraint member and the second restraint member fit with each other to restrict the firefighting pipe in a first direction and a second direction, the first direction is perpendicular to the first wall, and the second direction is parallel to the first wall and perpendicular to an extending direction of the firefighting pipe.

According to another not claimed aspect, an apparatus for manufacturing battery is provided and includes: a providing module configured to: provide a battery cell, where the battery cell includes a first wall, the first wall being provided with a pressure relief mechanism, and the pressure relief mechanism being configured to be actuated when internal pressure or temperature of the battery cell reaches a threshold, so as to relieve the internal pressure; provide a firefighting pipe, where the firefighting pipe is configured to accommodate a firefighting medium and discharge the firefighting medium when the pressure relief mechanism is actuated; and provide a fixing member, where the fixing member is disposed between the first wall and the firefighting pipe; and a mounting module configured to fixedly mount the firefighting pipe on the fixing member. The firefighting pipe includes a first restraint member, and the fixing member includes a second restraint member, where the first restraint member and the second restraint member fit with each other to restrict the firefighting pipe in a first direction and a second direction, the first direction is perpendicular to the first wall, and the second direction is parallel to the first wall and perpendicular to an extending direction of the firefighting pipe.

With the technical solution in this embodiment of this application, the firefighting pipe is disposed in the battery, such that the firefighting medium can be discharged when the pressure relief mechanism of the battery cell is actuated, which cools the emissions of the battery cell and even the inside of the battery cell, enhancing the safety performance of the battery. On this basis, the firefighting pipe is provided with the first restraint member, and the battery is further provided with the fixing member, the fixing member being provided with the second restraint member. The first restraint member and the second restraint member fit with each other to restrict the firefighting pipe in a plurality of directions, so that the firefighting pipe can be stably disposed in the battery and provide reliable firefighting and temperature regulation effects, so as to enhance the safety performance of the battery.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic exploded view of a cross section of a battery according to an embodiment of this application;
FIG. 5 is another schematic exploded view of a cross section of a battery according to an embodiment of this application;
FIG. 6 is a locally enlarged schematic diagram of part A in FIG. 5;
FIG. 7 is a locally enlarged schematic exploded view of a battery according to an embodiment of this application;
FIG. 8 is a locally enlarged schematic diagram of a battery according to an embodiment of this application;
FIG. 9 is a schematic three-dimensional exploded view of a battery according to an embodiment of this application;
FIG. 10 is another schematic exploded view of a cross section of a battery according to an embodiment of this application;
FIG. 11 is a locally enlarged schematic diagram of part B in FIG. 10;
FIG. 12 is another locally enlarged schematic exploded view of a battery according to an embodiment of this application;
FIG. 13 is another locally enlarged schematic diagram of a battery according to an embodiment of this application;
FIG. 14 is another schematic three-dimensional exploded view of a battery according to an embodiment of this application;
FIG. 15 is another schematic three-dimensional exploded view of a battery according to an embodiment of this application;
FIG. 16 is a schematic structural diagram of a firefighting pipe according to an embodiment of this application;
FIG. 17 is another schematic structural diagram of a firefighting pipe according to an embodiment of this application;
FIG. 18 is another schematic structural diagram of a firefighting pipe according to an embodiment of this application;
FIG. 19 is a schematic flowchart of a method for manufacturing battery according to an embodiment of this application; and
FIG. 20 is a schematic block diagram of an apparatus for manufacturing battery according to a not claimed embodiment of this application.

The accompanying drawings are not drawn to scale.

### DESCRIPTION OF EMBODIMENTS

The following further describes the implementations of this application in detail with reference to the accompanying drawings and embodiments. The detailed description of the following embodiments and the accompanying drawings are intended to exemplarily illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or elements mentioned must have specific orientations or must be constructed or manipulated according to specific orientations. These terms shall therefore not be construed as any limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between the contextually associated objects.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

The battery in this application is a physical module that includes one or more battery cells for providing electric energy. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically categorized into three types depending on their packaging: cylindrical battery cell, prismatic battery cell, and pouch battery cell. The type of battery is not limited in the embodiments of this application either.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is coated on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is coated on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together. The separator may be made of polypropylene (Polypropylene, PP), polyethylene (Polyethylene, PE), or the like. In addition, the electrode assembly may be a wound structure or a laminated structure, but the embodiments of this application are not limited thereto.

For the development of battery technologies, many design factors need to be considered, for example, performance parameters such as energy density, cycle life, discharge capacity, and charge and discharge rate, as well as safety of the battery.

For batteries, safety hazards mainly originate in charging and discharging. Therefore, in order to enhance the safety performance of batteries, a pressure relief mechanism is often provided for battery cells. The pressure relief mechanism is an element or part that is actuated when internal pressure or temperature of the battery cell reaches a predetermined threshold, so as to relieve the internal pressure or temperature. The predetermined threshold may be adjusted according to different design requirements. The predetermined threshold may depend on the material used for one or more of the positive electrode plate, negative electrode plate, electrolyte, and separator in the battery cell. The pressure relief mechanism may employ an element or part sensitive to pressure or temperature such that the pressure relief mechanism is actuated when the internal pressure or temperature of the battery cell reaches the predetermined threshold, thereby forming a channel for relieving the internal pressure or temperature.

"Actuate" mentioned in this application means that the pressure relief mechanism is put into action such that the internal pressure or temperature of the battery cell is relieved. The action that the pressure relief mechanism is put into may include but is not limited to, for example, cracking, tearing, or melting at least part of the pressure relief mechanism. When the pressure relief mechanism is actuated, high-temperature and high-pressure substances inside the battery cell are discharged from the pressure relief mechanism as emissions. In this way, the battery cell can relieve its pressure under controllable pressure or temperature, thereby avoiding more serious potential incidents.

The emissions from the battery cell mentioned in this application include but are not limited to electrolyte, fragments of positive and negative electrode plates and separator because of dissolution or breaking, and high-temperature and high-pressure gases and flames produced by reactions.

The pressure relief mechanism in the battery cell greatly influences the safety of the battery. For example, when the battery cell is short-circuited or overcharged, thermal runaway may be caused inside the battery cell, resulting in a sudden rise in pressure or temperature. In this case, the pressure relief mechanism can be actuated to make the internal pressure and temperature be relieved to the outside, thus preventing the battery cell from exploding and catching fire.

In addition to the pressure relief mechanism provided on the battery cell to guarantee the safety of the battery, a firefighting pipe may also be provided in the box for accommodating the battery cells. The firefighting pipe may accommodate a firefighting medium, and the firefighting medium may be a firefighting liquid, a firefighting gas, or a firefighting solid. Optionally, in some implementations, the firefighting pipe may be disposed corresponding to the pressure relief mechanism in the battery cell. When the pressure relief mechanism is actuated, the emissions discharged from the battery cell damage the wall of the firefighting pipe, causing the firefighting medium to flow out of the firefighting pipe. The firefighting medium can cool the high-temperature emissions from the battery cell and reduce the risk of the emissions, thereby enhancing the safety performance of the battery cells and the battery as a whole.

In some related technologies, a bracket is used to mount the firefighting pipe to the wall on which the pressure relief mechanism in the battery cell is located. For example, a bracket is disposed on the wall on which the pressure relief mechanism in the battery cell is located, and the firefighting pipe is disposed on the bracket and corresponding to the pressure relief mechanism. The bracket has only a simple restraint structure, for example, a groove, which fixes the firefighting pipe limitedly. Therefore, in this technical solution, mounting stability of the firefighting pipe in the battery is not good. When an electric apparatus (for example, an electric vehicle) in which the battery is located is in motion, the firefighting pipe in the battery is affected to some extent. In a case that the mounting stability of the firefighting pipe is not good, the firefighting pipe vibrates and even falls off from the battery cell, which affects the normal use of the firefighting pipe and poses a safety hazard to the battery.

In view of this, this application provides a battery. A firefighting pipe in the battery is provided with a first restraint member, and the battery further includes a fixing member. A second restraint member in the fixing member and the first restraint member on the firefighting pipe can fit with each other to achieve restriction and fixing of the firefighting pipe in a plurality of directions, improving mounting stability of the firefighting pipe in the battery and thereby enhancing safety performance of the battery.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, the spacecrafts include airplanes, rockets, space shuttles, spaceships, and the like.

It should be understood that the technical solutions described in the embodiments of this application are applicable to not only the apparatuses described above but also all apparatuses that use batteries. However, for brevity of description, in the following embodiments, an electric vehicle is used as an example for description.

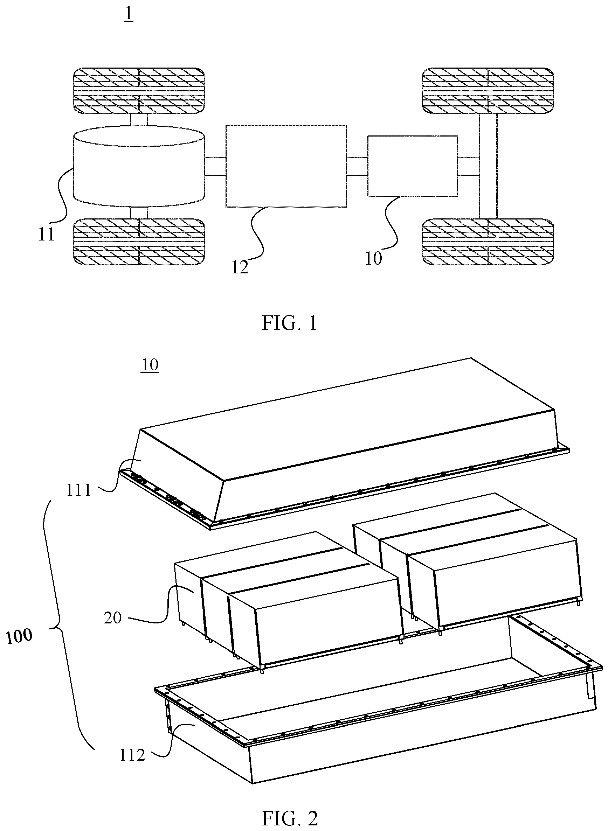

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 may be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be referred to as a battery pack. Optionally, a plurality of battery cells may be connected in series, parallel, or series-parallel to form a battery module first, and then a plurality of battery modules are connected in series, parallel, or series-parallel to form a battery. In other words, the plurality of battery cells may be directly combined into a battery, or may first be combined into battery modules which are then combined into a battery.

For example, FIG. 2 is a schematic structural diagram of a battery 10 according to an embodiment of this application. The battery 10 may include a plurality of battery cells 20. The battery 10 may further include a box 100 (or referred to as a cover body), the inside of the box 100 is a hollow structure, and the plurality of battery cells 20 are accommodated in the box 100. As shown in FIG. 2, the box 100 may include two portions, which are herein referred to as a first portion 111 and a second portion 112 respectively, and the first portion 111 and the second portion 112 are snap-fitted together. Shapes of the first portion 111 and the second portion 112 may be determined based on a shape in which the plurality of battery cells 20 are combined, and the first portion 111 and the second portion 112 each may have an opening. For example, the first portion 111 and the second portion 112 each may be a hollow cuboid and have only one face with an opening, the opening of the first portion 111 is disposed opposite the opening of the second portion 112, and the first portion 111 and the second portion 112 are snap-fitted to form a box 100 with an enclosed chamber. The plurality of battery cells 20 are connected in parallel, series, or series-parallel and then placed into the box 100 formed by snap-fitting the first portion 111 and the second portion 112.

Optionally, the battery 10 may further include other structures. Details are not described herein. For example, the battery 10 may further include a busbar that is used to implement electrical connection between the plurality of battery cells 20, for example, in a parallel, series, or series-parallel manner. Specifically, the busbar may implement the electrical connection between the battery cells 20 by connecting electrode terminals of the battery cells 20. Further, the busbar may be fixed to the electrode terminals of the battery cells 20 by welding. Electric energy of the plurality of battery cells 20 may be further led out by a conductive mechanism that passes through the box. Optionally, the conductive mechanism may also belong to the busbar.

According to different power requirements, a quantity of the battery cells 20 may be set to any numerical value. The plurality of battery cells 20 may be connected in series, parallel, or series-parallel to achieve large capacity or power. Because the quantity of battery cells 20 included in each battery 10 may be large, for ease of mounting, the battery cells 20 may be arranged in groups, and each group of battery cells 20 forms a battery module. The quantity of the battery cells 20 included in the battery module is not limited, and may be set according to requirements.

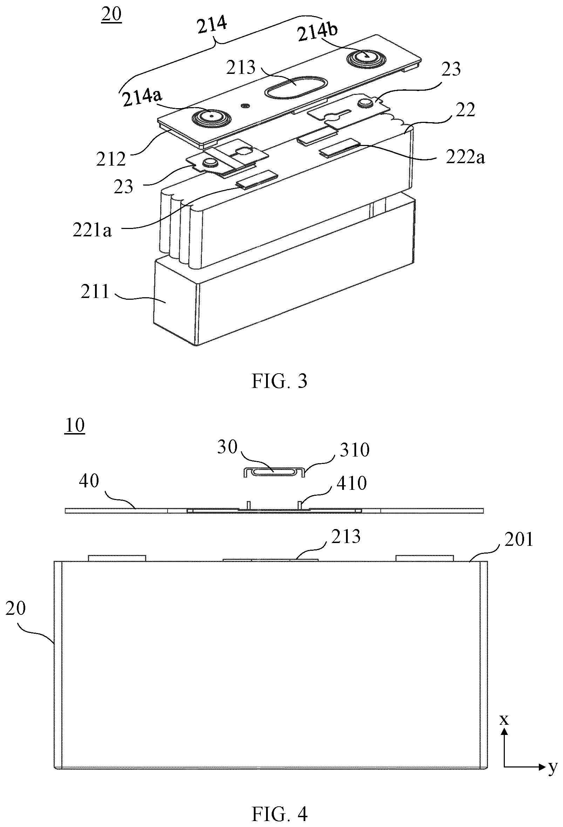

FIG. 3 is a schematic structural diagram of a battery cell 20 according to an embodiment of this application.

As shown in FIG. 3, the battery cell 20 includes one or more electrode assemblies 22, a housing 211, and a cover plate 212. The cover plate 212 and walls of the housing 211 all are referred to as walls of the battery cell 20. The housing 211 depends on a combined shape of the one or more electrode assemblies 22. For example, the housing 211 may be a hollow cuboid, a cube, or a cylinder, and one surface of the housing 211 has an opening for placing the one or more electrode assemblies 22 into the housing 211. For example, when the housing 211 is a hollow cuboid or cube, one plane of the housing 211 is an opening surface, which means that the plane has no wall so that the inside and the outside of the housing 211 are communicated. When the housing 211 is a hollow cylinder, an end surface of the housing 211 is an opening surface, which means that the end surface has no wall so that the inside and the outside of the housing 211 are communicated. The cover plate 212 covers the opening and is connected to the housing 211 to form an enclosed cavity for placing the electrode assemblies 22. The housing 211 is filled with an electrolyte, for example, a liquid electrolyte.

The battery cell 20 may also include two electrode terminals 214 that may be disposed on the cover plate 212. The cover plate 212 is generally in a shape of a flat plate, and the two electrode terminals 214 are fixed on a flat surface of the cover plate 212. The two electrode terminals 214 are a positive electrode terminal 214a and a negative electrode terminal 214b respectively. Each electrode terminal 214 is correspondingly provided with a connecting member 23 or a current collecting member 23 that is located between the cover plate 212 and the electrode assembly 22 for electrically connecting the electrode assembly 22 and the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab. The first tabs 221a of the one or more electrode assemblies 22 are connected to one electrode terminal through one connecting member 23, and the second tabs 222a of the one or more electrode assemblies 22 are connected to the other electrode terminal through the other connecting member 23. For example, the positive electrode terminal 214a is connected to the positive tab through one connecting member 23, and the negative electrode terminal 214b is connected to the negative tab through the other connecting member 23.

In the battery cell 20, one or more electrode assemblies 22 may be provided according to actual use requirements. As shown in FIG. 3, the battery cell 20 is provided with four independent electrode assemblies 22.

In an example, a pressure relief mechanism 213 may further be disposed on a wall of the battery cell 20. The pressure relief mechanism 213 is configured to be actuated when internal pressure or temperature of the battery cell 20 reaches a threshold, so as to relieve the internal pressure or temperature.

Optionally, in another embodiment of this application, the pressure relief mechanism 213 and the electrode terminals 214 are disposed on a same wall of the battery cell 20. For example, as shown in FIG. 3, the electrode terminals 214 and the pressure relief mechanism 213 may all be disposed on a top wall of the battery cell 20, that is, the cover plate 212.

The pressure relief mechanism 213 and the electrode terminals 214 being disposed on a same wall of the battery cell 20, for example, on the cover plate 212 of the battery cell 20, can facilitate processing and mounting of the pressure relief mechanism 213 and the electrode terminals 214, helping improve production efficiency of the battery 10.

Optionally, in an embodiment of this application, the pressure relief mechanism 213 and the electrode terminals 214 are disposed on different walls of the battery cell 20. For example, the electrode terminals 214 of the battery cell 20 may be disposed on a top wall of the battery cell 20, that is, the cover plate 212. The pressure relief mechanism 213 is disposed on another wall of the battery cell 20 that is different from the top wall. For example, the pressure relief mechanism 213 is disposed on a bottom wall opposite the top wall.

The pressure relief mechanism 213 may be a part of the wall on which it is located, or may be a separate structure from the wall on which it is located and be fixed to the wall on which it is located by, for example, welding. For example, in the embodiment shown in FIG. 3, when the pressure relief mechanism 213 is a part of the bottom wall, the pressure relief mechanism 213 may be formed by providing an indentation on the bottom wall, and thickness of the bottom wall corresponding to the indentation is less than thickness of other regions of the pressure relief mechanism 213 other than the indentation. The weakest portion of the pressure relief mechanism 213 is at the indentation. When internal pressure of the housing 211 rises and reaches a threshold due to too much gas produced by the battery cell 20, or when internal temperature of the battery cell 20 rises and reaches a threshold due to heat produced by internal reactions of the battery cell 20, the pressure relief mechanism 213 may break at the indentation, causing the inside and the outside of the housing 211 to be communicated and the gas pressure and temperature to be discharged out through the breakage of the pressure relief mechanism 213, thereby preventing the battery cell 20 from exploding.

In addition, the pressure relief mechanism 213 may be various possible pressure relief mechanisms. This is not limited in the embodiments of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal pressure of the battery cell 20 provided with the pressure relief mechanism 213 reaches the threshold.

FIG. 4 is a schematic exploded view of a cross section of the battery 10 according to an embodiment of this application.

As shown in FIG. 4, the battery 10 includes a battery cell 20 including a first wall 201, where the first wall 201 is provided with a pressure relief mechanism 213, the pressure relief mechanism 213 being configured to be actuated when internal pressure or temperature of the battery cell 20 reaches a threshold, so as to relieve the internal pressure; a firefighting pipe 30 configured to accommodate a firefighting medium, where the firefighting pipe 30 is configured to discharge the firefighting medium when the pressure relief mechanism 213 is actuated; and a fixing member 40 disposed between the first wall 201 and the firefighting pipe 30, where the fixing member 40 is configured to fix the firefighting pipe 30. The firefighting pipe 30 includes a first restraint member 310, and the fixing member 40 includes a second restraint member 410, where the first restraint member 310 and the second restraint member 410 fit with each other to restrict the firefighting pipe 30 in a first direction x and a second direction y, the first direction x is perpendicular to the first wall 201, and the second direction y is parallel to the first wall 201 and perpendicular to an extending direction of the firefighting pipe 30.

Specifically, in this embodiment of this application, the first wall 201 of the battery cell 20 may be the cover plate 212 in the embodiment shown in FIG. 3 or any wall of the housing 211. Optionally, the first wall 201 is not a wall with the largest area in the battery cell 20, and the wall with the largest area in the battery cell 20 can be used to be attached to other battery cells 20 or the box 100, improving mounting stability of the battery cell 20 in the box.

The first wall 201 is provided with the pressure relief mechanism 213. With reference to the foregoing description, the pressure relief mechanism 213 may be a part of the first wall 201 or a separate structure from the first wall 201. The pressure relief mechanism 213 may be a temperature-sensitive pressure relief mechanism, a pressure-sensitive pressure relief mechanism, or other types of pressure relief mechanisms. For the technical solution related to the pressure relief mechanism 213, reference may be made to the related descriptions in the foregoing embodiment. Details are not described herein again.

In an example, in this embodiment of this application, the pressure relief mechanism 213 and the electrode terminals 214 may all be disposed on the first wall 201, which can facilitate processing and mounting of the pressure relief mechanism 213 and the electrode terminals 214, helping improve production efficiency of the battery 10. Certainly, in other alternative embodiments, the pressure relief mechanism 213 and the electrode terminals 214 may alternatively be disposed on different walls of the battery cell 20.

Still referring to FIG. 4, in this embodiment of this application, the firefighting pipe 30 is disposed corresponding to the first wall 201. Optionally, the firefighting pipe 30 is disposed corresponding to the pressure relief mechanism 213 on the first wall 201. The firefighting pipe 30 accommodates the firefighting medium. When the pressure relief mechanism 213 is actuated and discharges high-temperature emissions from the inside of the battery cell 20, the firefighting pipe 30 can discharge the firefighting medium to cool the high-temperature emissions, preventing the high-temperature emissions from affecting the battery 10 and bringing about safety hazards. Further, in a case that the firefighting pipe 30 is disposed corresponding to the pressure relief mechanism 213, the firefighting medium discharged from the firefighting pipe 30 can flow into the inside of the battery cell 20 through the actuated pressure relief mechanism 213 to cool the inside of the battery cell 20, preventing the high temperature of the battery cell 20 from being transmitted to other battery cells 20 and affecting the other battery cells 20.

Optionally, the firefighting medium in the firefighting pipe 30 may be a cooling medium with low temperature. In addition to providing a better cooling effect when the pressure relief mechanism 213 is actuated, the cooling medium may also cool the battery cell 20 when the pressure relief mechanism 213 is not actuated, to prevent safety problems that are more likely to occur when the temperature of the battery cell 20 is excessively high. Optionally, the firefighting medium may be a firefighting gas, a firefighting liquid, or a firefighting solid. In some implementations, the firefighting medium may circulate to achieve a better cooling effect. As an example rather than a limitation, in this embodiment of this application, the firefighting medium may be water, a mixture of water and ethylene glycol, air, or the like.

As an example rather than a limitation, as shown in FIG. 4, a main body of the firefighting pipe 30 may be a pipe with an annular cross section. In addition to the main body, the firefighting pipe 30 may further include the first restraint member 310, and the first restraint member 310 is connected to the main body of the firefighting pipe 30. Optionally, the first restraint member 310 and the main body of the firefighting pipe 30 may be an integrally formed structure, or the first restraint member 310 may be a separate structure from the main body of the firefighting pipe 30, for example, the first restraint member 310 may be fixed to the main body of the firefighting pipe 30 by mechanical connection such as welding. The first restraint member 310 is configured to fit with the fixing member 40 between the firefighting pipe 30 and the first wall 201 of the battery cell 20 to fix the firefighting pipe 30 to the first wall 201 of the battery cell 20.

Specifically, still referring to FIG. 4, the fixing member 40 includes the second restraint member 410, and the first restraint member 310 on the firefighting pipe 30 and the second restraint member 410 fit with each other to restrict the firefighting pipe 30 in the first direction x and the second direction y, where the first direction x is perpendicular to the first wall 201, and the second direction y is parallel to the first wall 201 and perpendicular to the extending direction of the firefighting pipe 30.

Optionally, in some implementations, the fixing member 40 may include only the second restraint member 410. The second restraint member 410 may be fixedly disposed on the first wall 201 of the battery cell 20 by mechanical connection such as welding.

Alternatively, in some other implementations, in addition to the second restraint member 410, the fixing member 40 may further include other structural members to facilitate mounting of the fixing member 40 and its second restraint member 410 on the first wall 201. In an example, as shown in FIG. 4, in addition to the second restraint member 410, the fixing member 40 may include a mounting portion, and the second restraint member 410 is provided on the mounting portion. With the mounting portion mounted on the first wall 201, the second restraint member 410 may be stably disposed on the first wall 201.

For mutual fitting and connection of the first restraint member 310 and the second restraint member 410, as an example rather than a limitation, in the implementation shown in FIG. 4, in the second direction y, the first restraint member 310 is provided on both sides of the firefighting pipe 30; and in the first direction x, the second restraint member 410 protrudes toward the firefighting pipe 30 and is provided corresponding to the first restraint member 310. When the first restraint member 310 and the second restraint member 410 fit with each other, the first restraint member 310 and the second restraint member 410 may abut against each other in the first direction x and the second direction y to restrict the firefighting pipe 30 in the first direction x and the second direction y.

Optionally, in addition to the mechanical structure of mutual fitting shown in FIG. 4, the first restraint member 310 and the second restraint member 410 may alternatively be provided as a mechanical structure using snap-fit slot, shaft hole insertion, concave-convex fitting, or other related manners to restrict the firefighting pipe 30 in the first direction x and the second direction y. Specific structures and a specific mutual fitting manner of the first restraint member 310 and the second restraint member 410 are not limited in this embodiment of this application, provided that the firefighting pipe 30 can be restricted in the first direction x and the second direction y.

With the technical solution in this embodiment of this application, the firefighting pipe 30 is disposed in the battery 10, such that the firefighting medium can be discharged when the pressure relief mechanism 213 of the battery cell 20 is actuated, to cool the emissions of the battery cell 20 and even the inside of the battery cell 20, enhancing the safety performance of the battery 10. On this basis, the firefighting pipe 30 is provided with the first restraint member 310, the battery 10 is further provided with the fixing member 40, the fixing member 40 is provided with the second restraint member 410, and the first restraint member 310 and the second restraint member 410 fit with each other to restrict the firefighting pipe 30 in a plurality of directions, so that the firefighting pipe 30 can be stably disposed in the battery 10 and provide reliable firefighting and temperature regulation effects, so as to enhance the safety performance of the battery 10.

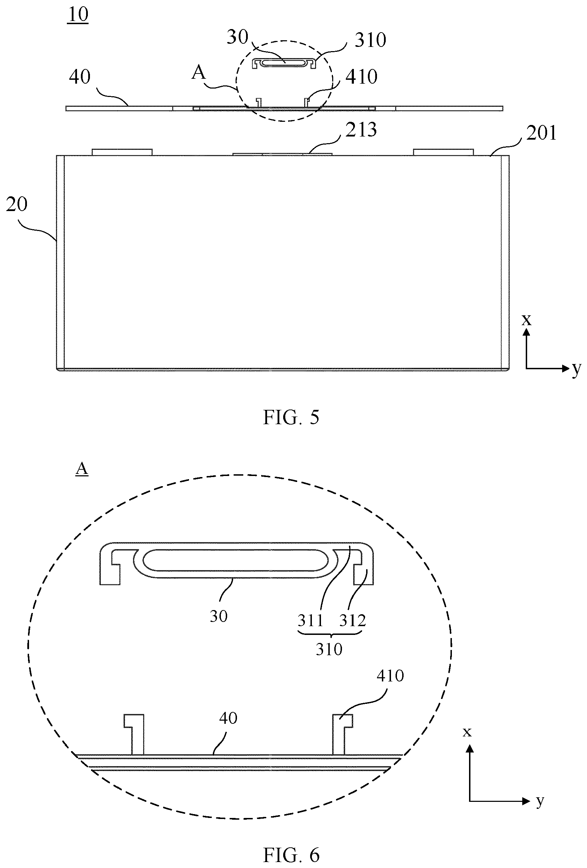

FIG. 5 is another schematic exploded view of a cross section of the battery 10 according to an embodiment of this application, and FIG. 6 is a locally enlarged schematic diagram of part A in FIG. 5.

With reference to FIG. 5 and FIG. 6, in this embodiment of this application, the first restraint member 310 on the firefighting pipe 30 is a single-claw structure. The single-claw structure includes a connecting portion 311 and a first claw portion 312, where the connecting portion 311 is formed by a pipe wall of the firefighting pipe 30 extending along the second direction y, the first claw portion 312 is connected to the connecting portion 311 and extends toward the battery cell 20, and the first claw portion 312 is snap-fitted with the second restraint member 410.

With the technical solution in this embodiment of this application, the first restraint member 310 on the firefighting pipe 30 is designed as the single-claw structure and is snap-fitted with the second restraint member 410 on the fixing member 40, which facilitation provision of the single-claw structure on the firefighting pipe 30 while ensuring connection stability between the first restraint member 310 and the second restraint member 410, improving production efficiency of the firefighting pipe 30.

Optionally, as shown in FIG. 6, both sides of the firefighting pipe 30 in the second direction y are provided with the first restraint member 310, that is, the both sides of the firefighting pipe 30 in the second direction y are provided with the single-claw structure. The single-claw structure on the both sides of the firefighting pipe 30 being snap-fitted with the second restraint member 410 can further improve mounting stability of the firefighting pipe 30 in the battery 10.

Optionally, in the first restraint member 310 of the single-claw structure, the connecting portion 311 may be connected to an end of the firefighting pipe 30 away from the battery cell 20. In an example, as shown in FIG. 6, the cross section of the firefighting pipe 30 may be in a shape of a runway, and a pipe wall of the firefighting pipe 30 away from the battery cell 20 is a flat plate structure parallel to the second direction y. This part of the pipe wall may be referred to as a first pipe wall of the firefighting pipe, and the connecting portion 311 may be an extension portion of the first pipe wall in the second direction y. In this implementation, the thickness space of the firefighting pipe 30 in the first direction x can be used to receive the first claw portion 312 that is connected to the connecting portion 311 and extends toward the battery cell 20. Correspondingly, the second restraint member 410 snap-fitted with the first claw portion 312 may also be provided in the thickness space of the firefighting pipe 30 in the first direction x, so as to save mounting space of the firefighting pipe 30 on the battery cell 20, which is conducive to reducing an overall volume of the battery 10, thereby increasing energy density of the battery 10.

As an example rather than a limitation, as shown in FIG. 6, the first claw portion 312 may include a first protrusion, and correspondingly, the second restraint member 410 may include a second protrusion. The first protrusion and the second protrusion may fit with each other so that the first claw portion 312 and the second restraint member 410 are snap-fitted with each other.

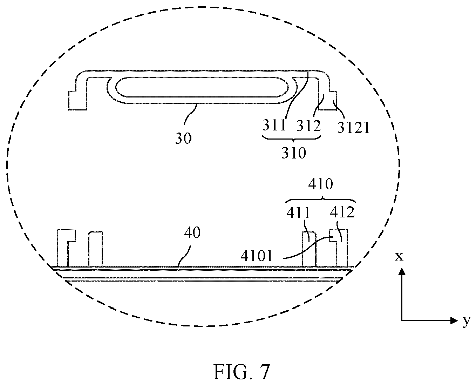

Alternatively, in other embodiments, the first claw portion 312 and the second restraint member 410 may be snap-fitted with each other in other manners. FIG. 7 is a locally enlarged schematic exploded view of the battery 10 according to another embodiment of this application.

As shown in FIG. 7, in this embodiment of this application, the second restraint member 410 is a slot structure. The slot structure includes a first slot wall 411 and a second slot wall 412 arranged in the second direction y, where the first slot wall 411 and the second slot wall 412 are configured to clamp the first claw portion 312 to restrict the firefighting pipe 30 in the first direction x and the second direction y.

Specifically, in this embodiment of this application, the second restraint member 410 is the slot structure that fits with the first claw portion 312, and the first slot wall 411 and the second slot wall 412 in the slot structure clamp the first claw portion 312, which can improve snap-fit strength between the first restraint member 310 and the second restraint member 410, thereby improving restriction and fixing effects of the firefighting pipe 30 in the first direction x and the second direction y and improving the mounting stability of the firefighting pipe 30 in the battery 10.

Optionally, to make the first slot wall 411 and the second slot wall 412 have a good clamping effect on the first claw portion 312, a distance between the first slot wall 411 and the second slot wall 412 in the second direction y is adapted to a size of the first claw portion 312 in the second direction y. For example, the distance between the first slot wall 411 and the second slot wall 412 in the second direction y is equal or similar to the size of the first claw portion 312 in the second direction y. In addition, sizes of the first slot wall 411, the second slot wall 412, and the first claw portion 312 in the first direction x may also be the same or similar.

Optionally, in some implementations of this embodiment of this application, the first slot wall 411, the second slot wall 412, and the first claw portion 312 may all be a plate structure. When the slot structure formed by the first slot wall 411 and the second slot wall 412 can firmly clamp the first claw portion 312, the second restraint member 410 of the slot structure can play a role not only directly in reliably and stably restricting and fixing the first claw portion 312 in the second direction y but also in restricting and fixing the first claw portion 312 in the first direction x to some extent through a frictional force.

Alternatively, in some other implementations of this embodiment of this application, to further improve the snap-fit strength between the second restraint member 410 and the first claw portion 312 in the first direction x to improve the restriction and fixing effects of the firefighting pipe 30 in the first direction x, in the second restraint member 410 of the slot structure, an end of the first slot wall 411 and/or the second slot wall 412 away from the battery cell 20 is provided with a first protrusion 4101, an end of the first claw portion 312 close to the battery cell 20 is provided with a second protrusion 3121, and the first protrusion 4101 and the second protrusion 3121 fit with each other to restrict the firefighting pipe 30 in the first direction x.

As an example rather than a limitation, as shown in FIG. 7, the second slot wall 412 is provided with the first protrusion 4101, the first protrusion 4101 and the second protrusion 3121 on the first claw portion 312 protrude in two opposite sub-directions in the second direction y, respectively, and when the first claw portion 312 is mounted between the first slot wall 411 and the second slot wall 412, the first protrusion 4101 and the second protrusion 3121 are provided opposite each other in the first direction x, so that the first protrusion 4101 and the second protrusion 3121 can fit with each other and be snap-fitted with each other. In addition, the first protrusion 4101 is provided at the end of the second slot wall 412 away from the battery cell 20, and the second protrusion 3121 is provided at the end of the first claw portion 312 close to the battery cell 20. When the second slot wall 412 and the first claw portion 312 are snap-fitted with each other, the second protrusion 3121 is provided toward the battery cell 20 relative to the first protrusion 4101, so that the first protrusion 4101 can prevent the second protrusion 3121 and the first claw portion 312 on which the second protrusion 3121 is located from leaving the battery cell 20.

It can be understood that in a case that the first slot wall 411 is provided with the first protrusion 4101, the first protrusion 4101 on the first slot wall 411 and the second protrusion 3121 on the first claw portion 312 may also protrude in two opposite sub-directions in the second direction y, respectively. Except that the protruding directions of the first protrusion 4101 and the second protrusion 3121 are opposite to the protruding directions shown in FIG. 7, for other related technical solutions, reference may be made to the foregoing related descriptions. Details are not described herein again.

In addition, it should be noted that in this embodiment of this application, when the first claw portion 312 is mounted between the first slot wall 411 and the second slot wall 412, the first protrusion 4101 and the second protrusion 3121 are designed to be opposite each other, provided that the second protrusion 3121 can be provided toward the battery cell 20 relative to the first protrusion 4101. Therefore, in addition to being provided at the end of the first slot wall 411 and/or the second slot wall 412 away from the battery cell 20, the first protrusion 4101 may alternatively be provided at other positions of the first slot wall 411 and/or the second slot wall 412. In addition to being provided at the end of the first claw portion 312 close to the battery cell 20, the second protrusion 3121 may alternatively be provided at other positions of the first claw portion 312. Specific positions of the first protrusion 4101 and the second protrusion 3121 are not limited in this embodiment of this application.

Optionally, in the implementation shown in FIG. 7, both the first protrusion 4101 and the second protrusion 3121 are block-shaped protrusions. Certainly, in other implementations, the first protrusion 4101 and the second protrusion 3121 may alternatively be protrusions in other shapes. Shapes of the first protrusion 4101 and the second protrusion 3121 are not specifically limited in this embodiment of this application.

In another embodiment of this application, an end of the first protrusion 3121 on the first claw portion 312 away from the battery cell 20 may be provided with a first slope 3122, and an end of the second protrusion 4101 on the first slot wall 411 and/or the second slot wall 412 close to the battery cell 20 is provided with a second slope 4102, the first slope 3122 and the second slope 4102 corresponding to each other and each being oblique to a plane perpendicular to the first wall 201.

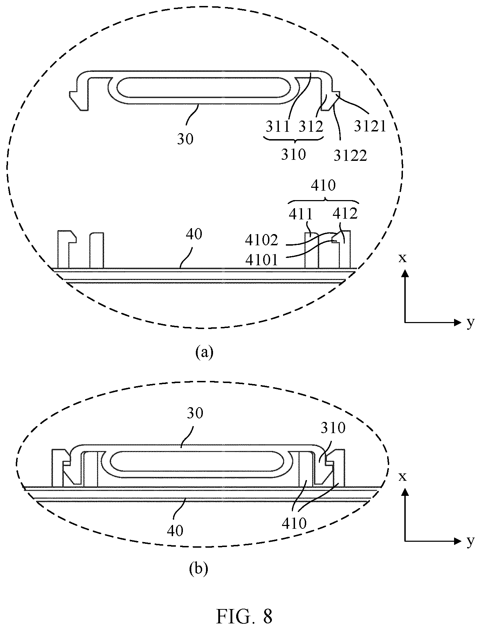

Based on the embodiment shown in FIG. 7, FIG. 8 is a locally enlarged schematic diagram of the battery 10 according to an embodiment of this application, where (a) in FIG. 8 is a locally enlarged schematic exploded view and (b) in FIG. 8 is a locally enlarged schematic assembling diagram.

As shown in FIG. 8, the end of the second protrusion 4101 on the second slot wall 412 close to the battery cell 20 is provided with the second slope 4102, and the end of the first protrusion 3121 on the first claw portion 312 away from the battery cell 20 is provided with the first slope 3122. When the first claw portion 312 is mounted between the first slot wall 411 and the second slot wall 412, the first slope 3122 and the second slope 4102 are provided opposite each other and slidably attached to each other. The first claw portion 312 is in slidable contact with the second slope 4102 of the second slot wall 412 through the first slope 3122 of the first claw portion 312, thereby facilitating the mounting of the first claw portion 312 between the first slot wall 411 and the second slot wall 412.

Optionally, the first slope 4102 and the second slope 3122 may be parallel to each other to optimize the slidable mounting of the first claw portion 312 between the first slot wall 411 and the second slot wall 412.

With the technical solution in this embodiment of this application, on the basis that the first claw portion 312 is provided with the first protrusion 3121 and the first slot wall 411 and/or the second slot wall 412 is provided with the second protrusion 4101 that fits with the first protrusion 3121, the first protrusion 3121 and the second protrusion 4101 may each be provided with a slope, and the slopes fit with each other, which can further improve mounting efficiency of the first claw portion 312 between the first slot wall 411 and the second slot wall 412 while ensuring a good snap-fit effect between the first claw portion 312 and the first slot wall 411 and the second slot wall 412, thereby improving the mounting efficiency of the firefighting pipe 30 in the battery 10 while ensuring the mounting stability of the firefighting pipe 30 in the battery 10.

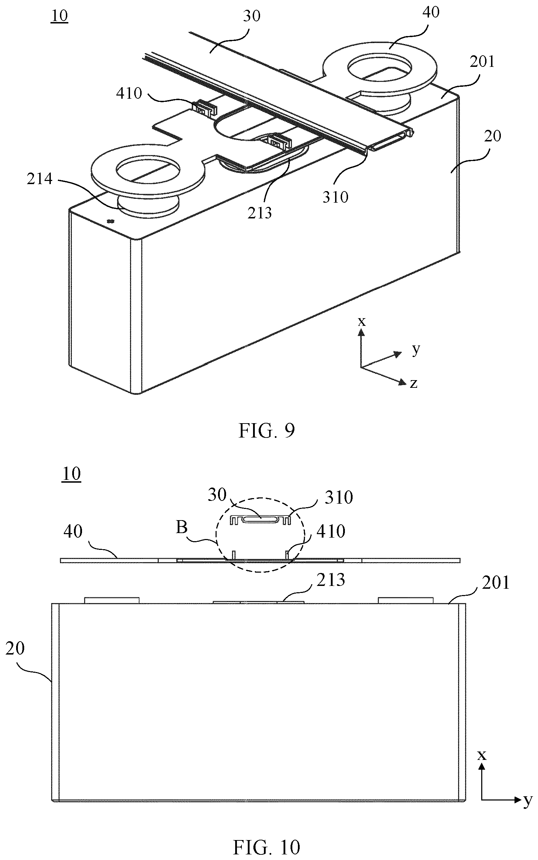

Based on the embodiment shown in FIG. 8, FIG. 9 is a schematic three-dimensional exploded view of the battery 10 according to an embodiment of this application.

As shown in FIG. 9, in this embodiment of this application, the second restraint member 410 is a slot structure. The slot structure extends along a third direction z, and the first claw portion 312 in the first restraint member 310 can slide in the slot structure along the third direction z, where the third direction z is parallel to the first wall 201 of the battery cell 20 and parallel to the extending direction of the firefighting pipe 30.

Specifically, in the second restraint member 410 of the slot structure, the first slot wall 411 and the second slot wall 412 can extend along the third direction z and have a certain length in the third direction z, so that the first claw portion 312 in the firefighting pipe 30 can slide between the first slot wall 411 and the second slot wall 412 along the third direction z.

During operation of the battery cell 20, gas inside the battery cell 20 swells due to chemical reactions inside the battery cell 20, and the battery cell 20 also swells accordingly. When the battery cell 20 swells in the third direction z, the position of the fixing member 40 located on the first wall 201 of the battery cell 20 changes, and even the position of the second restraint member 410 on the fixing member 40 changes. Because the first claw portion 312 in the firefighting pipe 30 can slide in the second restraint member 410 of the slot structure along the third direction z, even though the swelling of the battery cell 20 causes the position change of the second restraint member 410, it has little or no effect on the firefighting pipe 30. Therefore, even if the battery cell 20 swells, the mounting stability of the firefighting pipe 30 in the battery 10 remains high.

Optionally, as shown in FIG. 9, the fixing member 40 on the battery cell 20 may include a plurality of second restraint members 410. Specifically, in the second direction y, the fixing member 40 is provided with second restraint members 410 at positions corresponding to both sides of the firefighting pipe 30. In addition, in the third direction z, the fixing member 40 may alternatively be provided with a plurality of second restraint members 410 at a position corresponding to one side of the firefighting pipe 30, so as to further enhance the restriction and fixing effects of the firefighting pipe 30. Optionally, in the third direction z, two second restraint members 410 may be provided on two sides of the pressure relief mechanism 213 of the battery cell 20, respectively, and the fixing member 40 leaves an opening between the two second restraint members 410 for the pressure relief mechanism 213 to relive the pressure inside the battery cell 20.

It can be understood that as an example rather than a limitation, FIG. 9 shows the number and position arrangement of the second restraint members 410 on the fixing member 40 in this embodiment of this application. The fixing member 40 has an opening corresponding to the pressure relief mechanism 213, and the firefighting pipe 30 is disposed corresponding to the pressure relief mechanism 213 and the opening. Therefore, in this embodiment of this application, the second restraint member 410 can be provided at any position, other than the opening in the fixing member 40, that can fit with the first restraint member 310 on the firefighting pipe 30. The number and positions of the second restraint members 410 on the fixing member 40 are not specifically limited in this embodiment of this application.

In addition, in the implementation shown in FIG. 9, both ends of the fixing member 40 may be provided with annular mounting portions. The annular mounting portions and the electrode terminals 214 in the battery cell 20 fit with each other, so that the fixed mounting of the fixing member 40 on the battery cell 20 can be achieved. Certainly, in addition to the implementation shown in FIG. 9, the fixed mounting of the fixing member 40 on the battery cell 20 may alternatively be achieved in other mechanical fixing solutions. A manner of mounting the fixing member 40 on the battery cell 20 is not specifically limited in this embodiment of this application.

Still referring to FIG. 9, optionally, in this embodiment of this application, the wall with the largest area in the battery cell 20 is provided toward the third direction z. In this case, the plurality of battery cells 20 may be attached to each other and arranged in the third direction z, which can improve stability between the plurality of battery cells 20. In addition, the firefighting pipe 30 extends along the third direction z, that is, the arrangement direction of the plurality of battery cells 20, which can provide firefighting and temperature regulation effects on the plurality of battery cells 20 simultaneously.

In addition, in the embodiment shown in FIG. 9, in addition to the second restraint member 410 of the slot structure extending along the third direction z, optionally, the first restraint member 310 on the firefighting pipe 30 may also extend along the third direction z.

In some implementations, in the third direction z, the first restraint member 310 and the firefighting pipe 30 have a same extending length. With the technical solution in the implementations, the firefighting pipe 30 can be easily mounted on a plurality of fixing members 40 at different positions via the first restraint members 310 on the firefighting pipe 30. In an example, in different types of battery cells 20, sizes of the battery cells 20 in the third direction z may change, and therefore positions of fixing members 40 on the different types of battery cells 20 may also change accordingly. In another example, in a plurality of battery cells 20, fixing members 40 may be disposed on first walls 210 of only some of the battery cells 20, and positions of the fixing members 40 on the plurality of battery cells 20 may also be adjusted and changed under different application requirements. In the case of the foregoing two examples, with the technical solution in this embodiment of this application, the first restraint member 310 on the firefighting pipe 30 can still be used to fit with the fixing member 40 for mounting. In other words, fixed mounting of the firefighting pipe 30 is not affected by the change in the positions of the fixing members 40 on the plurality of battery cells 20. With the technical solution in the implementations, the mounting efficiency of the firefighting pipe 30 in the battery 10 can be improved, and the firefighting pipe 30 can be applicable to more application scenarios, facilitating promotion and use of the firefighting pipe 30 in many different types of batteries 10.

In some other implementations, in the third direction z, an extending length of the first restraint member 310 may alternatively be less than that of the firefighting pipe 30. Specifically, in the third direction z, the extending length of the first restraint member 310 matches that of the second restraint member 410. With the technical solution in the implementations, the mounting of the firefighting pipe 30 in the battery 10 may alternatively be implemented by the first restraint member 310 and the second restraint member 410, reducing overall manufacturing costs of the firefighting pipe 30.

The foregoing describes the technical solutions of the battery 10 provided in some embodiments of this application with reference to FIG. 5 to FIG. 9. With the technical solutions in the foregoing embodiments of this application, the first restraint member 310 on the firefighting pipe 30 is the single-claw structure. The following describes the technical solutions of the battery 10 provided in some other embodiments of this application with reference to FIG. 10 to FIG. 14. With the technical solutions in the following embodiments of this application, the first restraint member 310 on the firefighting pipe 30 is a double-claw structure.

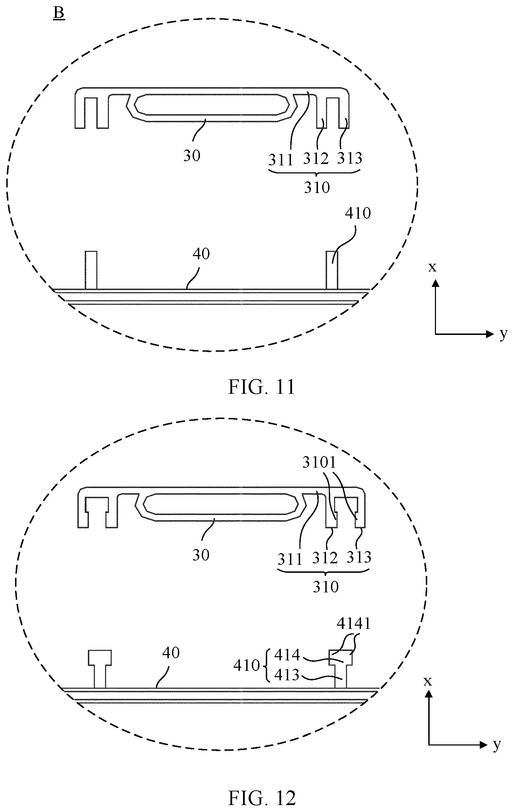

FIG. 10 is another schematic exploded view of a cross section of the battery 10 according to an embodiment of this application, and FIG. 11 is a locally enlarged schematic diagram of part B in FIG. 10.

With reference to FIG. 10 and FIG. 11, in this embodiment of this application, the first restraint member 310 on the firefighting pipe 30 is a double-claw structure. The double-claw structure includes a connecting portion 311 and a first claw portion 312 and a second claw portion 313 arranged in the second direction y, where the connecting portion 311 is formed by a pipe wall of the firefighting pipe 30 extending along the second direction y, and the first claw portion 312 and the second claw portion 313 are connected to the connecting portion 311 and extend toward the battery cell 20; and the first claw portion 312 and the second claw portion 313 are configured to clamp the second restraint member 410 to restrict the firefighting pipe 30 in the first direction x and the second direction y.

Optionally, as shown in FIG. 11, both sides of the firefighting pipe 30 in the second direction y are provided with the first restraint member 310, that is, the both sides of the firefighting pipe 30 in the second direction y are provided with the double-claw structure. The double-claw structure on the both sides of the firefighting pipe 30 clamping the second restraint member 410 can further improve mounting stability of the firefighting pipe 30 in the battery 10.

With the technical solution in this embodiment of this application, the first restraint member 310 of the double-claw structure is provided on the firefighting pipe 30, and the double-claw structure is used to clamp the second restraint member 410 on the fixing member 40 to mount the firefighting pipe 30 in the battery 10. Specifically, when the double-claw structure clamps the second restraint member 410, the double-claw structure can achieve good restriction and fixing effects of the second restraint member 410 in two opposite sub-directions in the second direction y, so that the firefighting pipe 30 has high stability in the second direction y. In addition, when the double-claw structure clamps the second restraint member 410, the double-claw structure and the second restraint member 410 can have interaction forces in the first direction x, so as to ensure that the firefighting pipe 30 also has certain stability in the first direction x.

Optionally, in the first restraint member 310 of the double-claw structure, the connecting portion 311 may be connected to an end of the firefighting pipe 30 away from the battery cell 20. In an example, as shown in FIG. 11, the cross section of the firefighting pipe 30 may be in a shape of a runway, and a pipe wall of the firefighting pipe 30 away from the battery cell 20 is a flat plate structure parallel to the second direction y. This part of the pipe wall may be referred to as a first pipe wall of the firefighting pipe, and the connecting portion 311 may be an extension portion of the first pipe wall in the second direction y. In this implementation, the thickness space of the firefighting pipe 30 in the first direction x can be used to receive the first claw portion 312 and the second claw portion 313 that are connected to the connecting portion 311 and extend toward the battery cell 20. Correspondingly, the second restraint member 410 clamped between the first claw portion 312 and the second claw portion 313 may also be provided in the thickness space of the firefighting pipe 30 in the first direction x, so as to save mounting space of the firefighting pipe 30 on the battery cell 20, which is conducive to reducing an overall volume of the battery 10, thereby increasing energy density of the battery 10.

Optionally, in the implementation shown in FIG. 11, the first claw portion 312 and the second claw portion 313 may be a plate structure, and correspondingly, the second restraint member 410 may also be a plate structure. In the second direction y, a distance between the first claw portion 312 and the second claw portion 313 may be similar to a size of the second restraint member 410, so that the first claw portion 312 and the second claw portion 313 can reliably clamp the second restraint member 410, improving mounting reliability of the firefighting pipe 30 in the battery 10. In addition, sizes of the first claw portion 312, the second claw portion 313, and the second restraint member 410 in the first direction x may also be the same or similar. In the first direction x, in this implementation, the sizes of the three in the first direction x can be fully used to increase a frictional force of the second restraint member 410 between the first claw portion 312 and the second claw portion 313, thereby further improving the mounting reliability of the firefighting pipe 30 in the battery 10.

Based on the embodiment shown in FIG. 11, FIG. 12 is another locally enlarged schematic exploded view of the battery 10 according to an embodiment of this application.

As shown in FIG. 12, in this embodiment of this application, the second restraint member 410 is a snap-fit structure. The snap-fit structure includes a first snap-fit portion 413 and a second snap-fit portion 414 arranged in the first direction x, where the first snap-fit portion 413 is formed by the fixing member 40 extending along a direction leaving the battery cell 20, the second snap-fit portion 414 is provided at an end of the first snap-fit portion 413 away from the battery cell 20, and a size of the second snap-fit portion 414 is not smaller than that of the first snap-fit portion 413 in the second direction y. In addition, in the first restraint member 310 of the double-claw structure on the firefighting pipe 30, the first claw portion 312 and/or the second claw portion 313 is snap-fitted with the second snap-fit portion 414.

Specifically, in this embodiment of this application, in the fixing member 40, the second restraint member 410 is the snap-fit structure including the first snap-fit portion 413 and the second snap-fit portion 414, the second snap-fit portion 414 is provided toward the firefighting pipe 30 relative to the first snap-fit portion 413, and the size of the second snap-fit portion 414 in the second direction y is not smaller than that of the first snap-fit portion 413 in the second direction y. Therefore, the second snap-fit portion 414 with a larger size can easily achieve snap-fit of the second snap-fit portion 414 in the double-claw structure of the firefighting pipe 30, and improve snap-fit strength of the second snap-fit portion 414 in the double-claw structure.

As an example rather than a limitation, in some implementations, in the first restraint member 310 of the double-claw structure on the firefighting pipe 30, an end of the first claw portion 311 and/or the second claw portion 312 close to the battery cell 20 is provided with a third protrusion 3101; and the second snap-fit portion 414 includes a fourth protrusion 4141 protruding in the second direction y relative to the first snap-fit portion 413, and the fourth protrusion 4141 and the third protrusion 3101 fit with each other to restrict the firefighting pipe 30 in the first direction x. With the technical solution in the implementations, the snap-fit strength between the second snap-fit portion 414 and the double-claw structure in the first direction x can be improved.

For example, in the implementation shown in FIG. 12, both ends of the first claw portion 311 and the second claw portion 312 close to the battery cell 20 are provided with the third protrusion 3101, and the two third protrusions 3101 are arranged in the second direction y and provided opposite each other. Corresponding to the two third protrusions 3101, the second snap-fit portion 414 is provided with two fourth protrusions 4141 at an end of the second restraint member 410 away from the battery cell 20, and the two fourth protrusions 4141 are located on two sides of the second snap-fit portion 414 in the second direction y, respectively.

In the implementation shown in FIG. 12, when the second snap-fit portion 414 is mounted between the first claw portion 312 and the second claw portion 313, each third protrusion 3101 and its corresponding fourth protrusion 4141 are provided opposite each other in the first direction x, so that the third protrusion 3101 and the fourth protrusion 4141 can fit with each other for snap-fit. In addition, the third protrusion 3101 is provided at an end of the first restraint member 310 close to the battery cell 20, and the fourth protrusion 4141 is provided at the end of the second restraint member 410 away from the battery cell 20. When the first restraint member 310 and the second restraint member 410 are snap-fitted with each other, the fourth protrusion 4141 is provided toward the battery cell 20 relative to the third protrusion 3101, and the fourth protrusion 4141 can prevent the third protrusion 3101 and the double-claw structure on which the third protrusion 3101 is located from leaving the battery cell 20.

It can be understood that in addition to the implementation shown in FIG. 12, the third protrusion 3101 may be provided on only one of the first claw portion 312 and the second claw portion 313, and correspondingly, the fourth protrusion 4101 may be provided on only one side of the second snap-fit portion 414 in the second direction y. In this implementation, the double-claw structure and the second snap-fit portion 414 can also be snap-fitted with each other in the first direction x.

In addition, it should be noted that in this embodiment of this application, when the second snap-fit portion 414 is mounted between the first claw portion 312 and the second claw portion 313, the third protrusion 3101 and the fourth protrusion 4141 are designed to be opposite each other, provided that the fourth protrusion 4141 can be provided toward the battery cell 20 relative to the third protrusion 3101. Therefore, in addition to being provided at the end of the second restraint member 410 away from the battery cell 20, the fourth protrusion 4141 may alternatively be provided at other positions of the second restraint member 410. In addition to being provided at the end of the first claw portion 312 and/or the second claw portion 313 close to the battery cell 20, the third protrusion 3101 may alternatively be provided at other positions of the first claw portion 312 and/or the second claw portion 313. Specific positions of the third protrusion 3101 and the fourth protrusion 4141 are not limited in this embodiment of this application.

Optionally, in the implementation shown in FIG. 12, both the third protrusion 3101 and the fourth protrusion 4141 are block-shaped protrusions. Certainly, in other implementations, the third protrusion 3101 and the fourth protrusion 4141 may alternatively be protrusions in other shapes. Shapes of the third protrusion 3101 and the fourth protrusion 4141 are not specifically limited in this embodiment of this application.

In another embodiment of this application, an end of the third protrusion 3101 close to the battery cell 20 is provided with a third slope 3102, and an end of the fourth protrusion 4141 away from the battery cell 20 is provided with a fourth slope 4142, the third slope 3102 and the fourth slope 4142 corresponding to each other and each being oblique to a plane perpendicular to the first wall 201 of the battery cell 20.

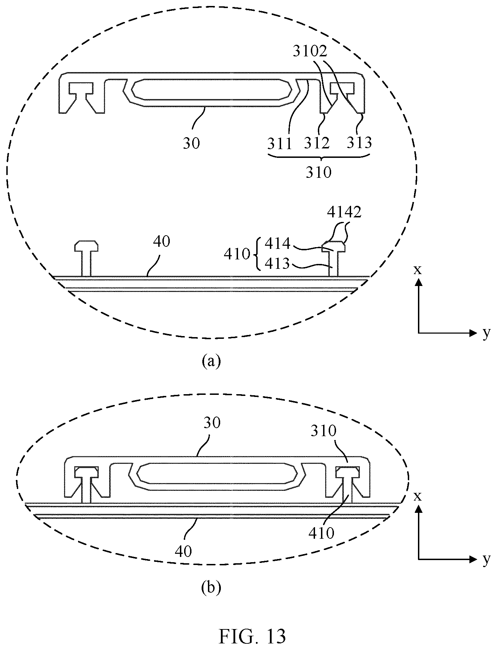

Based on the embodiment shown in FIG. 12, FIG. 13 is another locally enlarged schematic diagram of the battery 10 according to an embodiment of this application, where (a) in FIG. 13 is a locally enlarged schematic exploded view and (b) in FIG. 13 is a locally enlarged schematic assembling diagram.

As shown in FIG. 13, an end of the fourth protrusion 4141 on the second snap-fit portion 414 close to the battery cell 20 is provided with the fourth slope 4142, and ends of the third protrusions 3101 on the first claw portion 312 and the second claw portion 313 away from the battery cell 20 are provided with the third slopes 3102. When the second snap-fit portion 414 is mounted between the first claw portion 312 and the second claw portion 313, the third slope 3102 and the fourth slope 4142 are provided opposite each other and slidably attached to each other. The first claw portion 312 and the second claw portion 313 are in slidable contact with the fourth slope 4142 of the second snap-fit portion 414 through the third slopes 3102 of the first claw portion 312 and the second claw portion 313, thereby facilitating the mounting of the second snap-fit portion 414 between the first claw portion 312 and the second claw portion 313.

Optionally, the third slope 3102 and the fourth slope 4142 may be parallel to each other to optimize the slidable mounting of the second snap-fit portion 414 between the first claw portion 312 and the second claw portion 313.

With the technical solution in this embodiment of this application, on the basis that the first claw portion 312 and/or the second claw portion 313 is provided with the third protrusion 3101 and the second snap-fit portion 414 is provided with the fourth protrusion 4141 that fits with the third protrusion 3101, the third protrusion 3101 and the fourth protrusion 4141 may each be provided with a slope, and the slopes fit with each other, which can further improve mounting efficiency of the second snap-fit portion 414 between the first claw portion 312 and the second claw portion 313 while ensuring a good snap-fit effect between the second snap-fit portion 414 and the first claw portion 312 and the second claw portion 313, thereby improving the mounting efficiency of the firefighting pipe 30 in the battery 10 while ensuring the mounting stability of the firefighting pipe 30 in the battery 10.

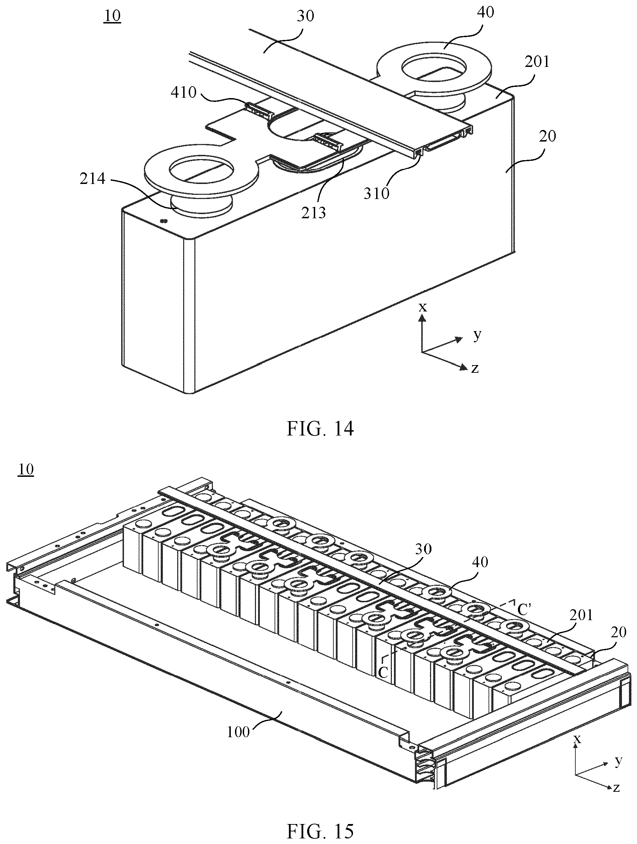

Based on the embodiment shown in FIG. 13, FIG. 14 is another schematic three-dimensional exploded view of the battery 10 according to an embodiment of this application.

As shown in FIG. 14, in this embodiment of this application, the first restraint member 310 is a double-claw structure. The double-claw structure extends along a third direction z, and the second restraint member 410 on the fixing member 40 can slide in the double-claw structure along the third direction z, where the third direction z is parallel to the first wall 201 of the battery cell 20 and parallel to the extending direction of the firefighting pipe 30.

Specifically, in the first restraint member 310 of the double-claw structure, the first claw portion 312 and the second claw portion 313 can extend along the third direction z and have a certain length in the third direction z, so that the second restraint member 410 on the fixing member 40 can slide between the first claw portion 312 and the second claw portion 313 along the third direction z.

During operation of the battery cell 20, gas inside the battery cell 20 swells due to chemical reactions inside the battery cell 20, and the battery cell 20 also swells accordingly. When the battery cell 20 swells in the third direction z, the position of the fixing member 40 located on the first wall 201 of the battery cell 20 changes, and even the position of the second restraint member 410 on the fixing member 40 changes. Because the second restraint member 410 can slide between the first claw portion 312 and the second claw portion 313 of the first restraint member 310 along the third direction z, even though the swelling of the battery cell 20 causes the position change of the second restraint member 410, it has little or no effect on the firefighting pipe 30. Therefore, even if the battery cell 20 swells, the mounting stability of the firefighting pipe 30 in the battery 10 remains high.

Optionally, as shown in FIG. 14, in this embodiment of this application, in addition to the first restraint member 310 of the double-claw structure extending along the third direction z, optionally, the second restraint member 410 on the fixing member 40 may also extend along the third direction z, thereby improving the mounting reliability between the second restraint member 410 and the double-claw structure.

In addition, for the fixing member 40 in this embodiment of this application, except that the structure of the second restraint member 410 on the fixing member 40 is different from that in the technical solution shown in FIG. 9, for other technical solutions related to the fixing member 40, reference may be made to the foregoing related descriptions of the embodiment shown in FIG. 9. Details are not described herein again.

Optionally, as an example rather than a limitation, in the implementation shown in FIG. 14, in the third direction z, the first restraint member 310 of the double-claw structure and the firefighting pipe 30 have a same extending length. In some other implementations, in the third direction z, an extending length of the first restraint member 310 of the double-claw structure may alternatively be less than that of the firefighting pipe 30. Specifically, in the third direction z, the extending length of the first restraint member 310 matches that of the second restraint member 410.

With reference to the foregoing related descriptions of the implementation shown in FIG. 9, in a case that the first restraint member 310 and the firefighting pipe 30 have a same extending length in the third direction z, the firefighting pipe 30 can be easily mounted on a plurality of fixing members 40 at different positions via the first restraint members 310 on the firefighting pipe 30, so that the mounting efficiency of the firefighting pipe 30 in the battery 10 can be improved, and the firefighting pipe 30 can be applicable to more application scenarios, facilitating promotion and use of the firefighting pipe 30 in many different types of batteries 10. In a case that the extending length of the first restraint member 310 in the third direction z is less than that of the firefighting pipe 30 in the third direction z, overall manufacturing costs of the firefighting pipe 30 can be reduced.

With reference to the technical solutions in the embodiments shown in FIG. 4 to FIG. 14, in this application, the firefighting pipe 30 may include at least one pair of the first restraint members 310, and each pair of the first restraint members 310 is located on two sides of the firefighting pipe 30 in the second direction y, respectively; and the fixing member 40 may include at least one pair of the second restraint members 410, and each pair of the second restraint members 410 is provided corresponding to each pair of the first restraint members 310.

Optionally, the firefighting pipe 30 may include one pair of the first restraint members 310, the pair of the first restraint members 310 is located on two sides of the firefighting pipe 30 in the second direction y, respectively, and an extending length of the pair of the first restraint members 310 in the third direction z is less than or equal to that of the firefighting pipe 30. In this implementation, the fixing member 40 includes at least one pair of the second restraint members 410, each of the at least one pair of the second restraint members 410 is correspondingly located on two sides of the firefighting pipe 30 in the second direction y, and each pair of the second restraint members 410 is provided corresponding to the pair of the first restraint members 310.

Optionally, the firefighting pipe 30 may include a plurality of pairs of the first restraint members 310, each of the plurality of pairs of the first restraint members 310 is located on two side of the firefighting pipe 30 in the second direction y, respectively, and an extending length of each pair of the first restraint members 310 in the third direction z is less than that of the firefighting pipe 30. In this implementation, the fixing member 40 includes a plurality of pairs of the second restraint members 410, each of the plurality of pairs of the second restraint members 410 is correspondingly located on two sides of the firefighting pipe 30 in the second direction y, and in the third direction z, the plurality of pairs of the second restraint members 410 may be provided in one-to-one correspondence with the plurality of pairs of the first restraint members 310.

With the technical solution in this embodiment of this application, at least one pair of the first restraint members 310 is provided on two sides of the firefighting pipe 30 in the second direction y, and the at least one pair of the first restraint members 310 and the corresponding at least one pair of the second restraint members 410 fit with each other to achieve reliable and stable restriction and fixing of the firefighting pipe 30 in the second direction y, thereby improving the mounting stability of the firefighting pipe 30 in the battery 10.

In addition to the technical solution in the foregoing embodiment of this application, in some other implementations, the first restraint members 310 may alternatively not be provided on two sides of the firefighting pipe 30 in the second direction y, but on a side of the firefighting pipe 30 facing toward the battery cell 20, that is, on a side of the firefighting pipe 30 in the first direction x. Alternatively, the first restraint members 310 may be provided on two sides of the firefighting pipe 30 in the third direction z. Specific positions and the number of the first restraint members 310 on the firefighting pipe 30 are not specifically limited in this embodiment of this application, provided that the first restraint member 310 and the second restraint member 410 on the fixing member 40 can fit with each other to stably mount the firefighting pipe 30 in the battery 10.

**In** addition, in this application, in addition to the single-claw structure or the double-claw structure described in the foregoing embodiments of this application, the first restraint member 310 may alternatively be a three-claw structure or a structure with more claws, so as to further improve the mounting stability of the firefighting pipe 30 in the battery 10. In this case, for each claw in a multi-claw structure, reference may be made to the related technical solutions in the foregoing embodiments, and for the second restraint member 410 corresponding to the multi-claw structure, reference may also be made to the related technical solutions in the foregoing embodiments. Details are not described herein again.

FIG. 15 is another schematic three-dimensional exploded view of the battery 10 according to an embodiment of this application.

As shown in FIG. 15, the battery 10 includes a plurality of battery cells 20 attached to each other and arranged in the third direction z, and the firefighting pipe 30 extends along the third direction z and is disposed corresponding to the pressure relief mechanisms 213 in the plurality of battery cells 20.

Optionally, as shown in FIG. 15, in a row of battery cells 20 arranged in the third direction z, the fixing members 40 are disposed between only some of the battery cells 20 and the firefighting pipe 30. The firefighting pipe 30 is provided with the first restraint member 310, and the fixing member 40 is provided with the second restraint member 410. For the technical solutions related to the first restraint member 310 and the second restraint member 410, reference may be made to the technical solution in any one of the foregoing embodiments in FIG. 4 to FIG. 14.

With the technical solution in this implementation, the number of the fixing members 40 in the battery 10 can be reduced while ensuring the fixing stability of the firefighting pipe 30 in the battery 10, thereby reducing the manufacturing costs of the battery 10.

Optionally, in the implementation shown in FIG. 15, the battery cells 20 provided with the fixing member 40 are spaced apart from at least one battery cell not provided with the fixing member 40. In this implementation, the size of the fixing member 40 may be designed to be large. For example, in the third direction z, in addition to the first wall 201 of the battery cell 20 in which the fixing member 40 is located, the fixing member 40 may also be provided on a first wall 201 of a battery cell 20 adjacent to the battery cell 20 in which the fixing member 40 is located. Therefore, with the technical solution in this implementation, the large fixing member 40 can achieve stable and reliable fixing of the fixing member 40 on the battery cell 20, and the large fixing member 40 may also be provided with a large second restraint member 410, so as to improve the mounting reliability between the second restraint member 410 and the first restraint member 310 on the firefighting pipe 30, thereby improving the mounting stability of the firefighting pipe 30 in the battery 10.

It can be understood that in the battery 10 shown in FIG. 15, the battery 10 may further include the box 100 for accommodating a plurality of battery cells 20. For example, in the box 100 shown in FIG. 15, the box 100 can be used to accommodate two rows of battery cells 20 arranged in the second direction y, and the plurality of battery cells 20 in each row of battery cells 20 are arranged in the third direction z. In an example, FIG. 15 shows only one of the two rows of battery cells 20.

It can be further understood that the schematic cross-sectional views in FIG. 4 to FIG. 8 and FIG. 10 to FIG. 13 may be the schematic cross-sectional view along C-C' direction in FIG. 15, and the schematic three-dimensional diagrams in FIG. 9 and FIG. 14 may be localized three-dimensional diagrams of FIG. 15. In other words, the technical solution in any one of the foregoing embodiments of this application in FIG. 4 to FIG. 14 may be applied to the embodiment of this application shown in FIG. 15.

In the foregoing embodiment of this application, the pipe wall of the firefighting pipe 30 may be a pipe wall having an even thickness, and in this implementation, the firefighting pipe 30 is manufactured in a convenient manner and the manufacturing process is mature.

Optionally, to further improve strength and impact resistance of the firefighting pipe 30 to guarantee firefighting and temperature regulation functions of the firefighting pipe 30 in the battery 10, at least part of the pipe wall of the firefighting pipe 30 can be designed to be thicker.

In some possible implementations, the firefighting pipe 30 includes a first pipe wall 301 and a second pipe wall 302 facing away from each other in the first direction x, and the first pipe wall 301 is farther away from the battery cell 20 than the second pipe wall 302, where thickness of the first pipe wall 301 is greater than that of the second pipe wall 302, and/or the first pipe wall 301 is provided with a reinforcing member 50.

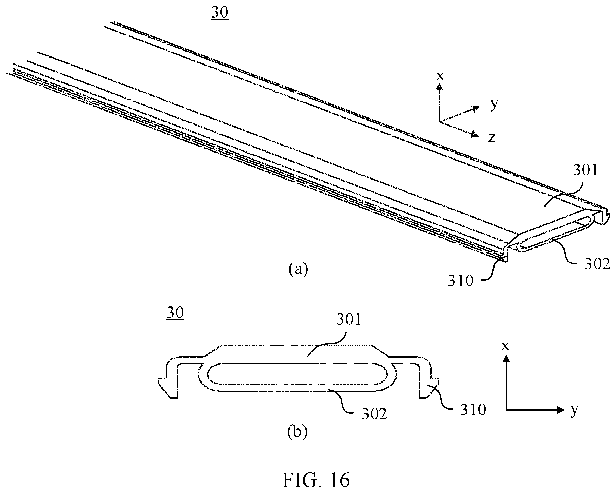

FIG. 16 is a schematic structural diagram of the firefighting pipe 30 according to an embodiment of this application, where (a) in FIG. 16 is a schematic three-dimensional structural diagram of the firefighting pipe 30, and (b) in FIG. 16 is a schematic cross-sectional view of the firefighting pipe 30 shown in (a).

As an example rather than a limitation, in FIG. 16, the cross section of the firefighting pipe 30 is similar to a shape of a runway, where the first pipe wall 301 and the second pipe wall 302 facing away from each other in the first direction x may be a flat plate structure, and thickness of the first pipe wall 301 in the first direction x is greater than that of the second pipe wall 302 in the first direction x.

It should be noted that in other implementations, the firefighting pipe 30 may alternatively be a pipe in other shapes, for example, a circular pipe, a quadrilateral pipe, or a polygonal pipe. In the implementations, the pipe wall of the firefighting pipe 30 may also include the first pipe wall 301 and the second pipe wall 302 facing away from each other in the first direction x, and the first pipe wall 301 and the second pipe wall 302 may be a flat plate structure, a curved plate structure, or in other shapes and structures. Specific shapes and structures of the firefighting pipe 30, the first pipe wall 301, and the second pipe wall 302 are not limited in this embodiment of this application.

With the technical solution in this embodiment of this application, in the firefighting pipe 30, the thickness of the first pipe wall 301 farther away from the battery cell 20 is greater than that of the second pipe wall 302 closer to the battery cell 20. Therefore, the first pipe wall 301 farther away from the battery cell 20 has a greater thickness and higher strength and is capable of withstanding an impact caused by an external force on the firefighting pipe 30 to a greater extent, improving reliability of the firefighting pipe 30 in the battery 10. In addition, when the emissions inside the battery cell 20 are discharged through the pressure relief mechanism 213, the emissions can more easily break through the second pipe wall 302 with a smaller thickness, so that the firefighting medium in the firefighting pipe 30 is discharged to provide a firefighting effect. When the emissions reach the first pipe wall 301 through the second pipe wall 302, the first pipe wall 301 with a greater thickness and higher strength can withstand the impact of the emissions, and the first pipe wall 301 is not easily broken through by the emissions, so that the firefighting medium in the firefighting pipe 30 can be prevented from being discharged from the gap in the first pipe wall 301, which avoids unnecessary waste of the firefighting medium, thereby improving the firefighting effect of the firefighting pipe 30.

Optionally, in the implementation shown in FIG. 16, the first pipe wall 301 includes a protrusion away from the battery cell 20, and with the protrusion, the thickness of the first pipe wall 301 can be greater than that of the second pipe wall 302. In this implementation, the thickness of the first pipe wall 301 is designed to not affect capacity of the pipe for accommodating the firefighting medium in the firefighting pipe 30. Certainly, in other implementations, to save the mounting space occupied by the firefighting pipe 30, the first pipe wall 301 may also suitably protrude toward the inside of the firefighting pipe 30. In addition, in the implementation shown in FIG. 16, the cross section of the first pipe wall 301 is similar to a trapezium, and in other implementations, the cross section of the first pipe wall 301 may alternatively be quadrilateral or in other shapes. A specific shape of the cross section of the first pipe wall 301 is not specifically limited in this embodiment of this application.

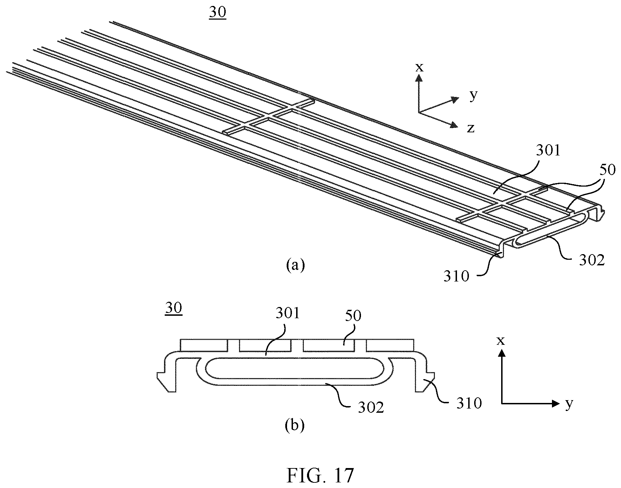

FIG. 17 is another schematic structural diagram of the firefighting pipe 30 according to an embodiment of this application, where (a) in FIG. 17 is a schematic three-dimensional structural diagram of the firefighting pipe 30, and (b) in FIG. 17 is a schematic cross-sectional view of the firefighting pipe 30 shown in (a).

As shown in FIG. 17, in the firefighting pipe 30 provided in this embodiment of this application, the first pipe wall 301 is provided with the reinforcing member 50. Optionally, a side of the first pipe wall 301 away from the battery cell 20 is provided with the reinforcing member 50, and the provision of the reinforcing member 50 does not affect the capacity of the pipe in the firefighting pipe 30.

Optionally, the reinforcing member 50 may be a strip structure. In some related technologies, the reinforcing member 50 of the strip structure may also be referred to as a stiffener. Providing the reinforcing member 50 on the first pipe wall 301 can also improve the strength of the first pipe wall 301, so as to improve the impact resistance of the first pipe wall 301, improving use reliability of the firefighting pipe 30 in the battery 10.

As an example rather than a limitation, in the implementation shown in FIG. 17, the reinforcing member 50 includes at least one first reinforcing member extending along the second direction y, and the at least one first reinforcing member is arranged in the third direction z; and/or the reinforcing member 50 includes at least one second reinforcing member extending along the third direction z, and the at least one second reinforcing member is arranged in the second direction y.

Optionally, in some implementations, a size of the first reinforcing member in the second direction y and that of the first pipe wall 301 in the second direction y may be similar or the same. Optionally, in some other implementations, as shown in FIG. 17, the first reinforcing member may further cover the connecting portion 311 in the first restraint member 310, that is, the size of the first reinforcing member in the second direction y and a sum of the sizes of the first pipe wall 301 and the connecting portion 311 in the second direction y may be similar or the same. The provision of the at least one first reinforcing member can improve the strength of the first pipe wall 301 in the second direction y.

Similarly, a size of the second reinforcing member in the third direction z and that of the first pipe wall 301 in the third direction z may be similar or the same. The provision of the at least one second reinforcing member can improve the strength of the first pipe wall 301 in the third direction z.

It can be understood that to improve the strength of the first pipe wall 301 to a greater extent, in some other implementations, the first pipe wall 301 may be further provided with the reinforcing member 50 while having a greater thickness. In other words, the firefighting pipe 30 with higher strength can be obtained by combining the solutions in the embodiments shown in FIG. 16 and FIG. 17.

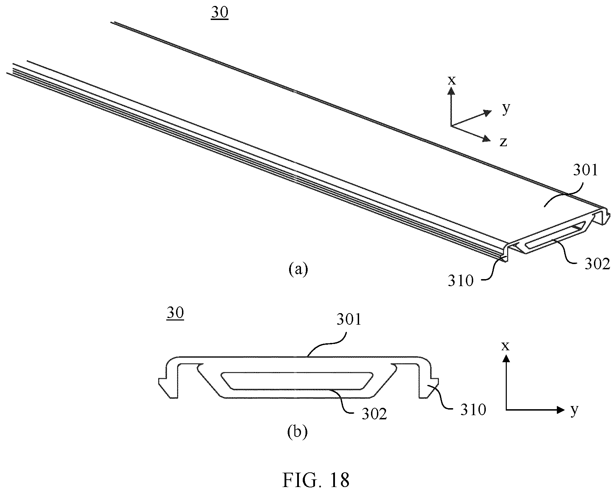

FIG. 18 is another schematic structural diagram of the firefighting pipe 30 according to an embodiment of this application, where (a) in FIG. 18 is a schematic three-dimensional structural diagram of the firefighting pipe 30, and (b) in FIG. 18 is a schematic cross-sectional view of the firefighting pipe 30 shown in (a).

As shown in FIG. 18, in this embodiment of this application, in the second direction y, a size of the first pipe wall 301 is greater than that of the second pipe wall 302.

As an example rather than a limitation, in the embodiment shown in FIG. 18, the cross section of the firefighting pipe 30 may be an inverted trapezium, and the size of the first pipe wall 301 in the second direction y may be greater than that of the second pipe wall 302 in the second direction y.

With the technical solution in the embodiment shown in FIG. 18, in the firefighting pipe 30, the sizes of the first pipe wall 301 and the second pipe wall 302 in the second direction y may also be designed to make the first pipe wall 301 stronger than the second pipe wall 302 in strength. To be specific, the first pipe wall 301 may have higher strength and be capable of withstanding the impact caused by the external force on the firefighting pipe 30 to a greater extent, improving the use reliability of the firefighting pipe 30 in the battery 10. In addition, when the emissions inside the battery cell 20 pass through the pressure relief mechanism 213 and impact the second pipe wall 302, the second pipe wall 302 may be entirely attached to the first pipe wall 301. When the first pipe wall 301 and the second pipe wall 302 have a same size, the second pipe wall 302 and the first pipe wall 301 attached to each other block a flow channel, and therefore prevent the firefighting medium in the firefighting pipe 30 from flowing through the corresponding pressure relief mechanism 213 and into the battery cell 20, affecting the firefighting effect of the firefighting pipe 30. However, with the technical solution in this embodiment of this application, the size of the first pipe wall 301 in the second direction y is greater than that of the second pipe wall 302 in the second direction y. Therefore, even if the second pipe wall 302 is attached to the first pipe wall 301, the flow channel is not completely blocked, so that the firefighting medium may flow through the corresponding pressure relief mechanism 213 and into the battery cell 20, providing a good firefighting effect.

Optionally, in the embodiment shown in FIG. 18, the first pipe wall 301 of the firefighting pipe 30 may use both the technical solutions in FIG. 16 and/or FIG. 17, that is, the thickness of the first pipe wall 301 is greater than that of the second pipe wall 302, and/or the first pipe wall 301 is provided with the reinforcing member 50, so as to further improve the strength of the first pipe wall 301.

It should be noted that in FIG. 16 to FIG. 18, the first restraint member 310 shown in FIG. 8 is used as an example for describing the first restraint member 310 on the firefighting pipe 30. The first restraint member 310 in FIG. 16 to FIG. 18 may also be the first restraint member 310 in any one of the embodiments in FIG. 4 to FIG. 15. In other words, in the embodiments shown in FIG. 16 to FIG. 18, the technical solutions related to the first pipe wall 301, the second pipe wall 302, and the reinforcing member 50 may be applied to any one of the embodiments in FIG. 4 to FIG. 15.

A not claimed embodiment of this application further provides an electric apparatus, where the electric apparatus may include the battery 10 in the foregoing embodiments, and the battery 10 is configured to supply electric energy to the electric apparatus.

Optionally, the electric apparatus may be a vehicle 1, a ship, or a spacecraft.

The foregoing describes the battery 10 and the electric apparatus in the embodiments of this application; and the following describes a method and an apparatus for manufacturing battery in the embodiments of this application. For those not described in detail, reference may be made to the foregoing embodiments.

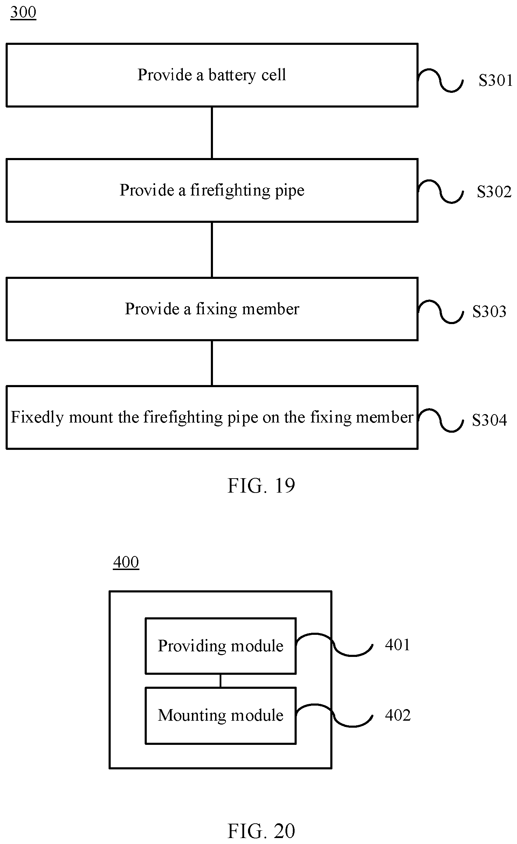

FIG. 19 is a schematic flowchart of a method 300 for manufacturing battery according to an embodiment of this application. As shown in FIG. 19, the method 300 may include the following steps.

S301: Provide a battery cell 20, where the battery cell 20 includes a first wall 201, the first wall 201 being provided with a pressure relief mechanism 213, and the pressure relief mechanism 213 being configured to be actuated when internal pressure or temperature of the battery cell 20 reaches a threshold, so as to relieve the internal pressure.

S302: Provide a firefighting pipe 30, where the firefighting pipe 30 is configured to accommodate a firefighting medium and discharge the firefighting medium when the pressure relief mechanism 213 is actuated.

S303: Provide a fixing member 40, where the fixing member 40 is disposed between the first wall 201 and the firefighting pipe 30.

S304: Fixedly mount the firefighting pipe 30 on the fixing member 40.

The firefighting pipe 30 includes a first restraint member 310, and the fixing member 40 includes a second restraint member 410, where the first restraint member 310 and the second restraint member 410 fit with each other to restrict the firefighting pipe 30 in a first direction x and a second direction y, the first direction x is perpendicular to the first wall 201, and the second direction y is parallel to the first wall 201 and perpendicular to an extending direction of the firefighting pipe 30.

FIG. 20 is a schematic block diagram of an apparatus 400 for manufacturing battery according to an embodiment of this application. As shown in FIG. 20, the apparatus 400 for manufacturing battery may include a providing module 401 and a mounting module 402.

The providing module 401 is configured to provide a battery cell 20, where the battery cell 20 includes a first wall 201, the first wall 201 being provided with a pressure relief mechanism 213, and the pressure relief mechanism 213 being configured to be actuated when internal pressure or temperature of the battery cell 20 reaches a threshold, so as to relieve the internal pressure.

The providing module 401 is further configured to provide a firefighting pipe 30, where the firefighting pipe 30 is configured to accommodate a firefighting medium and discharge the firefighting medium when the pressure relief mechanism 213 is actuated.

The providing module 401 is further configured to provide a fixing member 40, where the fixing member 40 is disposed between the first wall 201 and the firefighting pipe 30.

The mounting module 402 is configured to fixedly mount the firefighting pipe 30 on the fixing member 40.

The firefighting pipe 30 includes a first restraint member 310, and the fixing member 40 includes a second restraint member 410, where the first restraint member 310 and the second restraint member 410 fit with each other to restrict the firefighting pipe 30 in a first direction x and a second direction y, the first direction x is perpendicular to the first wall 201, and the second direction y is parallel to the first wall 201 and perpendicular to an extending direction of the firefighting pipe 30.

## Claims

1. A battery (10), **characterized by** comprising:
a battery cell (20) comprising a first wall (201), wherein the first wall (201) is provided with a pressure relief mechanism (213), the pressure relief mechanism (213) being configured to be actuated when internal pressure or temperature of the battery cell (20) reaches a threshold, so as to relieve the internal pressure;
a firefighting pipe (30) configured to accommodate a firefighting medium, wherein the firefighting pipe (30) is configured to discharge the firefighting medium when the pressure relief mechanism (213) is actuated; and
a fixing member (40) disposed between the first wall (201) and the firefighting pipe (30), wherein the fixing member (40) is configured to fix the firefighting pipe (30);
wherein the firefighting pipe (30) comprises a first restraint member (310), and the fixing member (40) comprises a second restraint member (410), wherein the first restraint member (310) and the second restraint member (410) fit with each other to restrict the firefighting pipe (30) in a first direction (x) and a second direction (y), the first direction (x) is perpendicular to the first wall (201), and the second direction (y) is parallel to the first wall (201) and perpendicular to an extending direction of the firefighting pipe (30).

2. The battery (10) according to claim 1, **characterized in that** the first restraint member (310) is a single-claw structure, the single-claw structure comprising a connecting portion (311) and a first claw portion (312), wherein the connecting portion (311) is formed by a pipe wall of the firefighting pipe (30) extending along the second direction (y), the first claw portion (312) is connected to the connecting portion (311) and extends toward the battery cell (20), and the first claw portion (312) is snap-fitted with the second restraint member (410).

3. The battery (10) according to claim 2, **characterized in that** the second restraint member (410) is a slot structure, the slot structure comprising a first slot wall (411) and a second slot wall (412) arranged in the second direction (y), wherein the first slot wall (411) and the second slot wall (412) are configured to clamp the first claw portion (312) to restrict the firefighting pipe (30) in the first direction (x) and the second direction (y).

4. The battery (10) according to claim 3, **characterized in that** an end of the first slot wall (411) and/or the second slot wall (412) away from the battery cell (20) is provided with a first protrusion (4101), and an end of the first claw portion (312) close to the battery cell (20) is provided with a second protrusion (3121), the first protrusion (4101) and the second protrusion (3121) fitting with each other to restrict the firefighting pipe (30) in the first direction (x).

5. The battery (10) according to claim 4, **characterized in that** an end of the first protrusion (4101) away from the battery cell (20) is provided with a first slope (4102), and an end of the second protrusion (3121) close to the battery cell (20) is provided with a second slope (3122), the first slope (4102) and the second slope (3122) corresponding to each other and each being oblique to a plane perpendicular to the first wall (201).

6. The battery (10) according to any one of claims 3 to 5, **characterized in that** the slot structure extends along a third direction (z), and the first claw portion (312) is able to slide in the slot structure along the third direction (z), wherein the third direction (z) is parallel to the first wall (201) and parallel to the extending direction of the firefighting pipe (30).

7. The battery (10) according to claim 1, **characterized in that** the first restraint member (310) is a double-claw structure, the double-claw structure comprising a connecting portion (311) and a first claw portion (312) and a second claw portion (313) arranged in the second direction (y), wherein the connecting portion (311) is formed by a pipe wall of the firefighting pipe (30) extending along the second direction (y), and the first claw portion (312) and the second claw portion (313) are connected to the connecting portion (311) and extend toward the battery cell (20); and
the first claw portion (312) and the second claw portion (313) are configured to clamp the second restraint member (410) to restrict the firefighting pipe (30) in the first direction (x) and the second direction (y).

8. The battery (10) according to claim 7, **characterized in that** the second restraint member (410) is a snap-fit structure, the snap-fit structure comprising a first snap-fit portion (413) and a second snap-fit portion (414) arranged in the first direction (x), wherein the first snap-fit portion (413) is formed by the fixing member (40) extending along a direction leaving the battery cell (20), the second snap-fit portion (414) is provided at an end of the first snap-fit portion (413) away from the battery cell (20), a size of the second snap-fit portion (414) is not smaller than that of the first snap-fit portion (413) in the second direction (y), and the first claw portion (312) and/or the second claw portion (313) is snap-fitted with the second snap-fit portion (414).

9. The battery (10) according to claim 8, **characterized in that** an end of the first claw portion (312) and/or the second claw portion (313) close to the battery cell (20) is provided with a third protrusion (3101); and
the second snap-fit portion (414) comprises a fourth protrusion (4141) protruding in the second direction (y) relative to the first snap-fit portion (413), and the fourth protrusion (4141) and the third protrusion (3101) fit with each other to restrict the firefighting pipe (30) in the first direction (x), optionally **characterized in that** an end of the third protrusion (3101) close to the battery cell (20) is provided with a third slope (3102), and an end of the fourth protrusion (4141) away from the battery cell (20) is provided with a fourth slope (4142), the third slope (3102) and the fourth slope (4142) corresponding to each other and each being oblique to a plane perpendicular to the first wall (201).

10. The battery (10) according to any one of claims 7 to 9, **characterized in that** the double-claw structure extends along a third direction (z), and the second restraint member (410) is able to slide in the double-claw structure along the third direction (z), wherein the third direction (z) is parallel to the first wall (201) and parallel to the extending direction of the firefighting pipe (30).

11. The battery (10) according to any one of claims 1 to 10, **characterized in that** the first restraint member (310) extends along the third direction (z), and the first restraint member (310) and the firefighting pipe (30) have a same extending length in the third direction (z), wherein the third direction (z) is parallel to the first wall (201) and parallel to the extending direction of the firefighting pipe (30).

12. The battery (10) according to any one of claims 1 to 11, **characterized in that** the firefighting pipe (30) comprises at least one pair of the first restraint members (310), and each pair of the first restraint members (310) is located on two sides of the firefighting pipe (30) in the second direction (y), respectively; and
the fixing member (40) comprises at least one pair of the second restraint members (410), and each pair of the second restraint members (410) is provided corresponding to each pair of the first restraint members (310).

13. The battery (10) according to any one of claims 1 to 12, **characterized in that** the firefighting pipe (30) comprises a first pipe wall (301) and a second pipe wall (302) facing away from each other in the first direction (x), the first pipe wall (301) being farther away from the battery cell (20) than the second pipe wall (302), wherein thickness of the first pipe wall (301) is greater than that of the second pipe wall (302), and/or the first pipe wall (301) is provided with a reinforcing member (50) , optionally **characterized in that** in the second direction (y), a size of the first pipe wall (301) is greater than that of the second pipe wall (302).

14. A method (300) for manufacturing battery, **characterized by** comprising:
providing (S301) a battery cell, wherein the battery cell comprises a first wall, the first wall being provided with a pressure relief mechanism, and the pressure relief mechanism being configured to be actuated when internal pressure or temperature of the battery cell reaches a threshold, so as to relieve the internal pressure;
providing (S302) a firefighting pipe, wherein the firefighting pipe is configured to accommodate a firefighting medium and discharge the firefighting medium when the pressure relief mechanism is actuated;
providing (S303) a fixing member, wherein the fixing member is disposed between the first wall and the firefighting pipe; and
fixedly mounting (S304) the firefighting pipe on the fixing member;
wherein the firefighting pipe comprises a first restraint member, and the fixing member comprises a second restraint member, wherein the first restraint member and the second restraint member fit with each other to restrict the firefighting pipe in a first direction and a second direction, the first direction is perpendicular to the first wall, and the second direction is parallel to the first wall and perpendicular to an extending direction of the firefighting pipe.

## Patentansprüche

1. Eine Batterie (10), **gekennzeichnet durch**:
eine Batteriezelle (20), umfassend eine erste Wand (201), wobei die erste Wand (201) mit einem Druckentlastungsmechanismus (213) versehen ist, wobei der Druckentlastungsmechanismus (213) konfiguriert ist, aktiviert zu werden, wenn der Innendruck oder die Temperatur der Batteriezelle (20) einen Schwellenwert erreicht, um den Innendruck zu entlasten;
ein Löschrohr (30), konfiguriert zur Aufnahme eines Löschmittels, wobei das Löschrohr (30) konfiguriert ist, das Löschmittel auszustoßen, wenn der Druckentlastungsmechanismus (213) aktiviert wird; und
ein Befestigungselement (40), angeordnet zwischen der ersten Wand (201) und dem Löschrohr (30), wobei das Befestigungselement (40) konfiguriert ist, das Löschrohr (30) zu fixieren;
wobei das Löschrohr (30) ein erstes Halteelement (310) umfasst und das Befestigungselement (40) ein zweites Halteelement (410) umfasst, wobei das erste Halteelement (310) und das zweite Halteelement (410) miteinander passen, um das Löschrohr (30) in einer ersten Richtung (x) und einer zweiten Richtung (y) zu fixieren, wobei die erste Richtung (x) senkrecht zur ersten Wand (201) ist und die zweite Richtung (y) parallel zur ersten Wand (201) und senkrecht zur Ausdehnungsrichtung des Löschrohrs (30) ist.

2. Die Batterie (10) nach Anspruch 1, **gekennzeichnet dadurch, dass** das erste Halteelement (310) eine Einklauenstruktur ist, wobei die Einklauenstruktur einen Verbindungsabschnitt (311) und einen ersten Klauenabschnitt (312) umfasst, wobei der Verbindungsabschnitt (311) durch eine Rohrwand des Löschrohrs (30) gebildet wird, die sich entlang der zweiten Richtung (y) erstreckt, der erste Klauenabschnitt (312) mit dem Verbindungsabschnitt (311) verbunden ist und sich zur Batteriezelle (20) hin erstreckt, und der erste Klauenabschnitt (312) mit dem zweiten Halteelement (410) einrastet.

3. Die Batterie (10) nach Anspruch 2, **gekennzeichnet dadurch, dass** das zweite Halteelement (410) eine Schlitzstruktur ist, wobei die Schlitzstruktur eine erste Schlitzwand (411) und eine zweite Schlitzwand (412) umfasst, die in der zweiten Richtung (y) angeordnet sind, wobei die erste Schlitzwand (411) und die zweite Schlitzwand (412) konfiguriert sind, den ersten Klauenabschnitt (312) zu klemmen, um das Löschrohr (30) in der ersten Richtung (x) und der zweiten Richtung (y) zu fixieren.

4. Die Batterie (10) nach Anspruch 3, **gekennzeichnet dadurch, dass** ein Ende der ersten Schlitzwand (411) und/oder der zweiten Schlitzwand (412), das von der Batteriezelle (20) entfernt ist, mit einem ersten Vorsprung (4101) versehen ist, und ein Ende des ersten Klauenabschnitts (312), das der Batteriezelle (20) nahe ist, mit einem zweiten Vorsprung (3121) versehen ist, wobei der erste Vorsprung (4101) und der zweite Vorsprung (3121) miteinander passen, um das Löschrohr (30) in der ersten Richtung (x) zu fixieren.

5. Die Batterie (10) nach Anspruch 4, **gekennzeichnet dadurch, dass** ein Ende des ersten Vorsprungs (4101), das von der Batteriezelle (20) entfernt ist, mit einer ersten Schräge (4102) versehen ist, und ein Ende des zweiten Vorsprungs (3121), das der Batteriezelle (20) nahe ist, mit einer zweiten Schräge (3122) versehen ist, wobei die erste Schräge (4102) und die zweite Schräge (3122) einander entsprechen und jeweils schräg zu einer Ebene verlaufen, die senkrecht zur ersten Wand (201) steht.

6. Die Batterie (10) nach einem der Ansprüche 3 bis 5, **gekennzeichnet dadurch, dass** sich die Schlitzstruktur entlang einer dritten Richtung (z) erstreckt und der erste Klauenabschnitt (312) in der Schlitzstruktur entlang der dritten Richtung (z) gleiten kann, wobei die dritte Richtung (z) parallel zur ersten Wand (201) und parallel zur Ausdehnungsrichtung des Löschrohrs (30) ist.

7. Die Batterie (10) nach Anspruch 1, **gekennzeichnet dadurch, dass** das erste Halteelement (310) eine Zweiklauenstruktur ist, wobei die Zweiklauenstruktur einen Verbindungsabschnitt (311), einen ersten Klauenabschnitt (312) und einen zweiten Klauenabschnitt (313) umfasst, die in der zweiten Richtung (y) angeordnet sind, wobei der Verbindungsabschnitt (311) durch eine Rohrwand des Löschrohrs (30) gebildet wird, die sich entlang der zweiten Richtung (y) erstreckt, und der erste Klauenabschnitt (312) und der zweite Klauenabschnitt (313) mit dem Verbindungsabschnitt (311) verbunden sind und sich zur Batteriezelle (20) hin erstrecken; und
der erste Klauenabschnitt (312) und der zweite Klauenabschnitt (313) konfiguriert sind, das zweite Halteelement (410) zu klemmen, um das Löschrohr (30) in der ersten Richtung (x) und der zweiten Richtung (y) zu fixieren.

8. Die Batterie (10) nach Anspruch 7, **gekennzeichnet dadurch, dass** das zweite Halteelement (410) eine Schnappstruktur ist, wobei die Schnappstruktur einen ersten Schnappabschnitt (413) und einen zweiten Schnappabschnitt (414) umfasst, die in der ersten Richtung (x) angeordnet sind, wobei der erste Schnappabschnitt (413) durch das Befestigungselement (40) gebildet wird, das sich in eine Richtung von der Batteriezelle (20) weg erstreckt, der zweite Schnappabschnitt (414) an einem Ende des ersten Schnappabschnitts (413) vorgesehen ist, das von der Batteriezelle (20) entfernt ist, eine Größe des zweiten Schnappabschnitts (414) in der zweiten Richtung (y) nicht kleiner ist als die des ersten Schnappabschnitts (413), und der erste Klauenabschnitt (312) und/oder der zweite Klauenabschnitt (313) mit dem zweiten Schnappabschnitt (414) einrastet.

9. Die Batterie (10) nach Anspruch 8, **gekennzeichnet dadurch, dass** ein Ende des ersten Klauenabschnitts (312) und/oder des zweiten Klauenabschnitts (313), das der Batteriezelle (20) nahe ist, mit einem dritten Vorsprung (3101) versehen ist; und
der zweite Schnappabschnitt (414) einen vierten Vorsprung (4141) umfasst, der relativ zum ersten Schnappabschnitt (413) in der zweiten Richtung (y) hervorsteht, wobei der vierte Vorsprung (4141) und der dritte Vorsprung (3101) miteinander passen, um das Löschrohr (30) in der ersten Richtung (x) zu fixieren, optional **gekennzeichnet dadurch, dass** ein Ende des dritten Vorsprungs (3101), das der Batteriezelle (20) nahe ist, mit einer dritten Schräge (3102) versehen ist, und ein Ende des vierten Vorsprungs (4141), das von der Batteriezelle (20) entfernt ist, mit einer vierten Schräge (4142) versehen ist, wobei die dritte Schräge (3102) und die vierte Schräge (4142) einander entsprechen und jeweils schräg zu einer Ebene verlaufen, die senkrecht zur ersten Wand (201) steht.

10. Die Batterie (10) nach einem der Ansprüche 7 bis 9, **gekennzeichnet dadurch, dass** sich die Zweiklauenstruktur entlang einer dritten Richtung (z) erstreckt und das zweite Halteelement (410) in der Zweiklauenstruktur entlang der dritten Richtung (z) gleiten kann, wobei die dritte Richtung (z) parallel zur ersten Wand (201) und parallel zur Ausdehnungsrichtung des Löschrohrs (30) ist.

11. Die Batterie (10) nach einem der Ansprüche 1 bis 10, **gekennzeichnet dadurch, dass** sich das erste Halteelement (310) entlang der dritten Richtung (z) erstreckt und das erste Halteelement (310) und das Löschrohr (30) eine gleiche Ausdehnungslänge in der dritten Richtung (z) haben, wobei die dritte Richtung (z) parallel zur ersten Wand (201) und parallel zur Ausdehnungsrichtung des Löschrohrs (30) ist.

12. Die Batterie (10) nach einem der Ansprüche 1 bis 11, **gekennzeichnet dadurch, dass** das Löschrohr (30) mindestens ein Paar der ersten Halteelemente (310) umfasst, wobei jedes Paar der ersten Halteelemente (310) jeweils auf zwei Seiten des Löschrohrs (30) in der zweiten Richtung (y) angeordnet ist; und
das Befestigungselement (40) mindestens ein Paar der zweiten Halteelemente (410) umfasst, wobei jedes Paar der zweiten Halteelemente (410) jeweils einem Paar der ersten Halteelemente (310) zugeordnet ist.

13. Die Batterie (10) nach einem der Ansprüche 1 bis 12, **gekennzeichnet dadurch, dass** das Löschrohr (30) eine erste Rohrwand (301) und eine zweite Rohrwand (302) umfasst, die sich in der ersten Richtung (x) voneinander weg erstrecken, wobei die erste Rohrwand (301) weiter von der Batteriezelle (20) entfernt ist als die zweite Rohrwand (302), wobei die Dicke der ersten Rohrwand (301) größer ist als die der zweiten Rohrwand (302), und/oder die erste Rohrwand (301) mit einem Verstärkungselement (50) versehen ist, optional **gekennzeichnet dadurch, dass** in der zweiten Richtung (y) eine Größe der ersten Rohrwand (301) größer ist als die der zweiten Rohrwand (302).

14. Ein Verfahren (300) zur Herstellung einer Batterie, **gekennzeichnet durch**:
Bereitstellen (S301) einer Batteriezelle, wobei die Batteriezelle eine erste Wand umfasst, wobei die erste Wand mit einem Druckentlastungsmechanismus versehen ist, und der Druckentlastungsmechanismus konfiguriert ist, aktiviert zu werden, wenn der Innendruck oder die Temperatur der Batteriezelle einen Schwellenwert erreicht, um den Innendruck zu entlasten;
Bereitstellen (S302) eines Löschrohrs, wobei das Löschrohr konfiguriert ist, ein Löschmittel aufzunehmen und das Löschmittel auszustoßen, wenn der Druckentlastungsmechanismus aktiviert wird;
Bereitstellen (S303) eines Befestigungselements, wobei das Befestigungselement zwischen der ersten Wand und dem Löschrohr angeordnet ist; und
Festes Montieren (S304) des Löschrohrs am Befestigungselement;
wobei das Löschrohr ein erstes Halteelement umfasst und das Befestigungselement ein zweites Halteelement umfasst, wobei das erste Halteelement und das zweite Halteelement miteinander passen, um das Löschrohr in einer ersten Richtung und einer zweiten Richtung zu fixieren, wobei die erste Richtung senkrecht zur ersten Wand ist und die zweite Richtung parallel zur ersten Wand und senkrecht zur Ausdehnungsrichtung des Löschrohrs ist.

## Revendications

1. Batterie (10), **caractérisée en ce qu'**elle comprend:
une cellule de batterie (20) comprenant une première paroi (201), dans laquelle la première paroi (201) est pourvue d'un mécanisme de décharge de pression (213), le mécanisme de décharge de pression (213) étant configuré pour être actionné lorsque la pression ou la température interne de la cellule de batterie (20) atteint un seuil, de manière à relâcher la pression interne;
un tuyau de lutte contre l'incendie (30) configuré pour contenir un agent extincteur, dans lequel le tuyau de lutte contre l'incendie (30) est configuré pour évacuer l'agent extincteur lorsque le mécanisme de décharge de pression (213) est actionné; et
un élément de fixation (40) disposé entre la première paroi (201) et le tuyau de lutte contre l'incendie (30), dans lequel l'élément de fixation (40) est configuré pour fixer le tuyau de lutte contre l'incendie (30);
dans lequel le tuyau de lutte contre l'incendie (30) comprend un premier élément de retenue (310), et l'élément de fixation (40) comprend un deuxième élément de retenue (410), dans lequel le premier élément de retenue (310) et le deuxième élément de retenue (410) s'emboîtent l'un dans l'autre pour contraindre le tuyau de lutte contre l'incendie (30) dans une première direction (x) et une deuxième direction (y), la première direction (x) est perpendiculaire à la première paroi (201), et la deuxième direction (y) est parallèle à la première paroi (201) et perpendiculaire à une direction d'extension du tuyau de lutte contre l'incendie (30).

2. Batterie (10) selon la revendication 1, **caractérisée en ce que** le premier élément de retenue (310) est une structure à griffe unique, la structure à griffe unique comprenant une partie de connexion (311) et une première partie de griffe (312), dans laquelle la partie de connexion (311) est formée par une paroi de tuyau du tuyau de lutte contre l'incendie (30) s'étendant le long de la deuxième direction (y), la première partie de griffe (312) est connectée à la partie de connexion (311) et s'étend vers la cellule de batterie (20), et la première partie de griffe (312) est encliquetée avec le deuxième élément de retenue (410).

3. Batterie (10) selon la revendication 2, **caractérisée en ce que** le deuxième élément de retenue (410) est une structure à fente, la structure à fente comprenant une première paroi de fente (411) et une deuxième paroi de fente (412) disposées dans la deuxième direction (y), dans laquelle la première paroi de fente (411) et la deuxième paroi de fente (412) sont configurées pour serrer la première partie de griffe (312) afin de restreindre le tuyau de lutte contre l'incendie (30) dans la première direction (x) et la deuxième direction (y).

4. Batterie (10) selon la revendication 3, **caractérisée en ce qu'**une extrémité de
la première paroi de fente (411) et/ou de la deuxième paroi de fente (412) à l'écart de la cellule de batterie (20) est pourvue d'une première saillie (4101), et une extrémité de la première partie de griffe (312) proche de la cellule de batterie (20) est pourvue d'une deuxième saillie (3121), la première saillie (4101) et la deuxième saillie (3121) s'emboîtant l'une l'autre pour restreindre le tuyau de lutte contre l'incendie (30) dans la première direction (x).

5. Batterie (10) selon la revendication 4, **caractérisée en ce qu'**une extrémité de la
première saillie (4101) à l'écart de la cellule de batterie (20) est pourvue d'une première pente (4102), et une extrémité de la deuxième saillie (3121) proche de la cellule de batterie (20) est pourvue d'une deuxième pente (3122), la première pente (4102) et la deuxième pente (3122) correspondant l'une à l'autre et étant chacune oblique à un plan perpendiculaire à la première paroi (201).

6. Batterie (10) selon l'une quelconque des revendications 3 à 5, **caractérisée en ce que** la structure à fente s'étend dans une troisième direction (z), et la première partie de griffe (312) peut glisser dans la structure à fente dans la troisième direction (z), dans laquelle la troisième direction (z) étant parallèle à la première paroi (201) et parallèle à la direction d'extension du tuyau de lutte contre l'incendie (30).

7. Batterie (10) selon la revendication 1, **caractérisée en ce que** le premier élément de retenue (310) est une structure à double griffe, la structure à double griffe comprenant une partie de connexion (311) et une première partie de griffe (312) et une deuxième partie de griffe (313) disposées dans la deuxième direction (y), dans laquelle la partie de connexion (311) étant formée par une paroi de tuyau du tuyau de lutte contre l'incendie (30) s'étendant dans la deuxième direction (y), et la première partie de griffe (312) et la deuxième partie de griffe (313) sont connectées à la partie de connexion (311) et s'étendent vers la cellule de batterie (20); et
la première partie de griffe (312) et la deuxième partie de griffe (313) sont configurées pour serrer le deuxième élément de retenue (410) afin de restreindre le tuyau de lutte contre l'incendie (30) dans la première direction (x) et la deuxième direction (y).

8. Batterie (10) selon la revendication 7, **caractérisée en ce que** le deuxième élément de retenue (410) est une structure à encliquetage, la structure à encliquetage comprenant une première partie d'encliquetage (413) et une deuxième partie d'encliquetage (414) disposée dans la première direction (x), dans laquelle la première partie d'encliquetage (413) est formée par l'élément de fixation (40) s'étendant dans une direction partant de la cellule de batterie (20), la deuxième partie d'encliquetage (414) est prévue à une extrémité de la première partie d'encliquetage (413) à l'écart de la cellule de batterie (20), une dimension de la deuxième partie d'encliquetage (414) n'étant pas inférieure à celle de la première partie d'encliquetage (413) dans la deuxième direction (y), et la première partie de griffe (312) et/ou la deuxième partie de griffe (313) est encliquetée avec la deuxième partie d'encliquetage (414).

9. Batterie (10) selon la revendication 8, **caractérisée en ce qu'**une extrémité de la première partie de griffe (312) et/ou de la deuxième partie de griffe (313) proche de la cellule de batterie (20) est pourvue d'une troisième saillie (3101); et
la deuxième partie d'encliquetage (414) comprend une quatrième saillie (4141) faisant saillie dans la deuxième direction (y) par rapport à la première partie d'encliquetage (413), et la quatrième saillie (4141) et la troisième saillie (3101) s'emboîtent l'une dans l'autre pour restreindre le tuyau de lutte contre l'incendie (30) dans la première direction (x), caractérisée optionnellement **en ce qu'**une extrémité de la troisième saillie (3101) proche de la cellule de batterie (20) est pourvue d'une troisième pente (3102), et une extrémité de la quatrième saillie (4141) à l'écart de la cellule de batterie (20) est pourvue d'une quatrième pente (4142), la troisième pente (3102) et la quatrième pente (4142) correspondant l'une à l'autre et chacune étant oblique à un plan perpendiculaire à la première paroi (201).

10. Batterie (10) selon l'une quelconque des revendications 7 à 9, **caractérisée en ce**
**que** la structure à double griffe s'étend dans une troisième direction (z), et le deuxième élément de retenue (410) peut glisser dans la structure à double griffe dans la troisième direction (z), dans laquelle la troisième direction (z) est parallèle à la première paroi (201) et parallèle à la direction d'extension du tuyau de lutte contre l'incendie (30).

11. Batterie (10) selon l'une quelconque des revendications 1 à 10, **caractérisée en ce que** le premier élément de retenue (310) s'étend dans la troisième direction (z), et le premier élément de retenue (310) et le tuyau de lutte contre l'incendie (30) ont une même longueur d'extension dans la troisième direction (z), dans laquelle la troisième direction (z) est parallèle à la première paroi (201) et parallèle à la direction d'extension du tuyau de lutte contre l'incendie (30).

12. Batterie (10) selon l'une quelconque des revendications 1 à 11, **caractérisée en ce que** le tuyau de lutte contre l'incendie (30) comprend au moins une paire de premiers éléments de retenue (310), et chaque paire de premiers éléments de retenue (310) est située sur deux côtés du tuyau de lutte contre l'incendie (30) dans la deuxième direction (y), respectivement; et
l'élément de fixation (40) comprend au moins une paire de deuxièmes éléments de retenue (410), et chaque paire de deuxièmes éléments de retenue (410) est prévue en correspondance avec chaque paire de premiers éléments de retenue (310).

13. Batterie (10) selon l'une quelconque des revendications 1 à 12, **caractérisée en ce que** le tuyau de lutte contre l'incendie (30) comprend une première paroi de tuyau (301) et une deuxième paroi de tuyau (302) orientées l'une vers l'autre dans la première direction (x), la première paroi de tuyau (301) étant plus éloignée de la cellule de batterie (20) que la deuxième paroi de tuyau (302), dans laquelle l'épaisseur de la première paroi de tuyau (301) est supérieure à celle de la deuxième paroi de tuyau (302), et/ou la première paroi de tuyau (301) est pourvue d'un élément de renforcement (50), caractérisée optionnellement **en ce que** dans la deuxième direction (y), une dimension de la première paroi de tuyau (301) est supérieure à celle de la deuxième paroi de tuyau (302).

14. Procédé (300) de fabrication d'une batterie, **caractérisé en ce qu'**il comprend:
la fourniture (S301) d'une cellule de batterie, dans lequel la cellule de batterie comprend une première paroi, la première paroi étant pourvue d'un mécanisme de décharge de pression, et le mécanisme de décharge de pression étant configuré pour être actionné lorsque la pression ou la température interne de la cellule de batterie atteint un seuil, de manière à relâcher la pression interne;
la fourniture (S302) d'un tuyau de lutte contre l'incendie, dans lequel le tuyau de lutte contre l'incendie est configuré pour contenir un agent extincteur et évacuer l'agent extincteur lorsque le mécanisme de décharge de pression est actionné;
la fourniture (S303) d'un élément de fixation, dans lequel l'élément de fixation est disposé entre la première paroi et le tuyau de lutte contre l'incendie; et
la fixation (S304) du tuyau de lutte contre l'incendie sur l'élément de fixation;
dans lequel le tuyau de lutte contre l'incendie comprend un premier élément de retenue, et l'élément de fixation comprend un deuxième élément de retenue, dans lequel le premier élément de retenue et le deuxième élément de retenue s'emboîtent l'un dans l'autre pour restreindre le tuyau de lutte contre l'incendie dans une première direction et une deuxième direction, la première direction est perpendiculaire à la première paroi, et la deuxième direction est parallèle à la première paroi et perpendiculaire à une direction d'extension du tuyau de lutte contre l'incendie.
